(19)

**Europäisches Patentamt**
**European Patent Office**
**Office européen des brevets**

(11)  **EP 4 394 233 B1**

(12)  ## EUROPÄISCHE PATENTSCHRIFT

(45) Veröffentlichungstag und Bekanntmachung des Hinweises auf die Patenterteilung:
**22.01.2025  Patentblatt 2025/04**

(21) Anmeldenummer: **22217434.4**

(22) Anmeldetag: **31.12.2022**

(51) Internationale Patentklassifikation (IPC):
**F17C 7/00** (2006.01)     **F17C 13/02** (2006.01)

(52) Gemeinsame Patentklassifikation (CPC):
**F17C 7/00; F17C 13/025;** F17C 2201/056;
F17C 2203/0391; F17C 2203/0629;
F17C 2205/0326; F17C 2205/0338; F17C 2221/012;
F17C 2223/0115; F17C 2223/036; F17C 2227/0306;
F17C 2227/0369; F17C 2250/032; F17C 2250/043;
F17C 2250/0439;                                (Forts.)

(54)  **VERFAHREN ZUM BETRIEB EINES KRYODRUCKTANKS**

METHOD FOR OPERATING A CRYOPRESSURE TANK

PROCÉDÉ DE FONCTIONNEMENT D'UN RÉSERVOIR CRYOGÉNIQUE SOUS PRESSION

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Veröffentlichungstag der Anmeldung:
**03.07.2024  Patentblatt 2024/27**

(73) Patentinhaber: **Cryomotive GmbH
85630 Grasbrunn (DE)**

(72) Erfinder: **KAPP, Matthew
81739 München (DE)**

(74) Vertreter: **Tautz & Schuhmacher
Nibelungenstraße 84
80639 München (DE)**

(56) Entgegenhaltungen:
WO-A1-2009/071208     WO-A1-2013/143773
WO-A1-2017/041963     FR-A3- 3 088 381

(52) Gemeinsame Patentklassifikation (CPC): (Forts.)
F17C 2250/0626; F17C 2250/072; F17C 2265/066;
F17C 2270/0168; F17C 2270/0184

**Beschreibung**

Bereitgestellt werden ein Verfahren zum Betrieb eines Kryodrucktanks, insbesondere eines $CcH_2$ CRYOGAS Tanks, eine Steuereinheit zum Betrieb eines Kryodrucktanks, ein Wasserstoffspeichersystem und ein Kraftfahrzeug. Die Offenbarung liegt somit insbesondere auf dem Gebiet Kryodrucktanks für Wasserstoff zur Verwendung in einem Kraftfahrzeug.

Im Stand der Technik sind Verfahren und Kryodrucktanks zur Speicherung von kryo-komprimiertem Wasserstoff ($CcH_2$) bekannt, welche für den Einsatz in leichten Kraftfahrzeugen, wie Personenkraftwagen, ausgelegt sind. Wenngleich die Funktionalität dieser Technologie von BMW in einem Prototypen des Modells Hydrogen 7 demonstriert wurde, erfolgt bisweilen noch keine kommerzielle Anwendung. Dabei werden einzelne Kryodrucktanks verwendet, welche eine Menge an Wasserstoff von etwa 7 kg speichern können. Derartige Kryodrucktanks und Verfahren zu deren Betrieb sind etwa in der WO 2009/071208 A1, der WO 2013/143773 A1, der WO 2013/143774 A1 und der WO 2022/150474 A1 beschrieben. Eine Herausforderung bei der Nutzung von Kryodrucktanks insbesondere in leichten Kraftfahrzeugen, wie insbesondere in Personenkraftwagen, sind die bei solchen Kraftfahrzeugen oftmals langen Standzeiten, welche mehrere Stunden, mehrere Tage oder gar mehrere Wochen betragen können. Während solcher Standzeiten führt ein Wärmeeintrag in den gespeicherten Wasserstoff zu einer stetigen Erhöhung des Drucks. Um ein Überschreiten des zulässigen Maximaldrucks des Kryodrucktanks zu vermeiden, ist ein geregeltes Abblasen eines Teils des gespeicherten Wasserstoffs die Folge, welche mit anderen Problemen einhergehen kann.

Um einen möglichst großen Puffer bis zum Erreichen des maximal zulässigen Drucks des Wasserstoffs auch bei langen Standzeiten zu erreichen, folgt im Regelbetrieb eine Entnahme des Wasserstoffs aus Kryodrucktanks herkömmlicherweise derart, dass durch Entnahme von Wasserstoff aus einem (nahezu) vollen Kryodrucktank der Druck möglichst rasch abgesenkt wird, um einen möglichst großen Abstand zum maximal zulässigen Druck des Kryodrucktanks zu erreichen und auf diese Weise auch lange Standzeiten absolvieren zu können, ohne den maximal zulässigen Betriebsdruck zu erreichen. Das rasche Absenken des Drucks bei der Entnahme von Wasserstoff aus dem (nahezu) vollen Kryodrucktank kann jedoch dazu führen, dass sich der thermodynamische Zustand des im Kryodrucktank gespeicherten Wasserstoffs der Zweiphasengrenze nähert oder diese gar erreicht, ab welcher zumindest ein Teil des gespeicherten Wasserstoffs in die flüssige Phase übergeht und entsprechend zunächst nicht mehr als gasförmiger, kryo-komprimierter Wasserstoff zur Verfügung steht. Dadurch kann die Entnahme des Wasserstoffs wegen des zu niedrigen Tankdrucks, sowie die Bestimmung der verbleibenden Restmenge (Speicherkapazität) im Behälter durch die nahe der Zweiphasengrenze nicht ausreichend genau mögliche Temperaturmessung erschwert werden, im Zweiphasengebiet durch die Kopplung von Temperatur und Druck ohne zusätzliche Sonden im Tank sogar unmöglich werden. Eine Entmischung der Phasen des im Kryodrucktanks gespeicherten Wasserstoffs kann somit eine Ermittlung des verbleibenden Tankinhalts lediglich über Temperatur und Druck unmöglich machen. Zudem kann die Wärmezufuhr bei zunehmend leerem Tank erheblich erschwert werden, sodass unter Umständen eine Weiterfahrt trotz einer ausreichend vorhandenen Restmenge an Wasserstoff im Kryodrucktank wegen eines zu geringen Tankdrucks nicht mehr möglich ist.

Neben der Verwendung von gespeichertem Wasserstoff in einem Kryodrucktank zur Versorgung eines Verbrauchers mit Energie beschreibt die WO 2013/143773 A1 mit Bezug zu Figur 4 auch ein Einleiten von Abwärme des Verbrauchers in den Kryodrucktank, um bei Bedarf den Verbraucher zu kühlen.

Vor dem Hintergrund dieses Standes der Technik besteht die Aufgabe der vorliegenden Offenbarung darin, ein verbessertes Verfahren zum Betrieb eines Kryodrucktanks anzugeben, welches geeignet ist, den Stand der Technik zu erweitern. Eine konkrete Ausgestaltung der Offenbarung kann die Aufgabe lösen, die Gefahr einer Verflüssigung des Wasserstoffs im Kryodrucktank (CcH2 CRYOGAS Tank) zuverlässig zu reduzieren, optional die Bestimmung der Kapazität von Wasserstoff im Tank durch einfache Temperatur- und Druckmessung zu verbessern, sowie optional die Bereitstellung von ausreichendem Tankdruck auch bei sich leerendem Tank sicher zu stellen.

Die Aufgabe wird gelöst durch ein Verfahren zum Betrieb eines Kryodrucktanks, eine Steuereinheit zum Betrieb eines Kryodrucktanks, ein Wasserstoffspeichersystem und ein Kraftfahrzeug mit den Merkmalen der jeweiligen unabhängigen Ansprüche. Optionale Ausgestaltungen sind in den Unteransprüchen und in der Beschreibung angegeben.

In einem ersten Aspekt wird ein Verfahren zum Betrieb eines Kryodrucktanks, in welchem kryogener Wasserstoff bei einem überkritischen Initialdruck und einer Initialdichte gespeichert ist, zur Versorgung eines Verbrauchers mit aus dem Kryodrucktank entnommenem Wasserstoff bereitgestellt. Das Verfahren umfasst ein Planen eines angestrebten Druckverlaufs über einen Vorgang zur vollständigen Entnahme des bei dem Initialdruck und der Initialdichte im Kryodrucktank gespeicherten Wasserstoffs hin zu einer vorbestimmten Mindestdichte bei einem vorbestimmten Mindestdruck des Wasserstoffs in entleertem Zustand des Kryodrucktanks derart, dass sich eine Druckabnahme des Wasserstoffs im Kryodrucktank hin zum Mindestdruck über den gesamten Vorgang zur vollständigen Entnahme erstreckt. Außerdem umfasst das Verfahren ein Regeln einer Wärmezufuhr in den Kryodrucktank während zumindest 70% des Vorgangs zur vollständigen Entnahme derart, dass der Druckverlauf des Wasserstoffs im Kryodrucktank um nicht mehr als 10% von dem angestrebten Druckverlauf abweicht.

In einem weiteren Aspekt wird eine Steuereinheit zum Betrieb eines Kryodrucktanks zur Speicherung von kryogenem Wasserstoff bei einem überkritischen Druck zur Versorgung eines Verbrauchers mit aus dem Kryodrucktank entnommenem Wasserstoff bereitgestellt, wobei die Steuereinheit dazu eingerichtet ist, ein offenbarungsgemäßes Verfahren durchzuführen.

In einem weiteren Aspekt wird ein Wasserstoffspeichersystem zur Speicherung von kryogenem Wasserstoff zur Versorgung eines Verbrauchers mit Wasserstoff bereitgestellt. Das Wasserstoffspeichersystem umfasst mindestens einen Kryodrucktank, welcher dazu ausgelegt ist, Wasserstoff bei einem überkritischen Initialdruck und mit einer Initialdichte zu speichern. Ferner umfasst das Wasserstoffspeichersystem ein Wärmezufuhrelement, welches dazu ausgelegt ist, dem im Kryodrucktank gespeicherten Wasserstoff Wärme zuzuführen. Außerdem umfasst das Wasserstoffspeichersystem eine Steuereinheit, welche dazu eingerichtet ist, die folgenden Schritte durchzuführen: (i) Planen eines angestrebten Druckverlaufs über einen Vorgang zur vollständigen Entnahme des bei dem Initialdruck und der Initialdichte im Kryodrucktank gespeicherten Wasserstoffs hin zu einer vorbestimmten Mindestdichte bei einem vorbestimmten Mindestdruck des Wasserstoffs in entleertem Zustand des Kryodrucktanks derart, dass sich eine Druckabnahme des Wasserstoffs im Kryodrucktank hin zum Mindestdruck über den gesamten Vorgang zur vollständigen Entnahme erstreckt. (ii) Regeln einer Wärmezufuhr in den Kryodrucktank mittels des Wärmezufuhrelements während zumindest 70% des Vorgangs zur vollständigen Entnahme derart, dass der Druckverlauf des Wasserstoffs im Kryodrucktank um nicht mehr als 10% von dem angestrebten Druckverlauf abweicht.

In einem weiteren Aspekt wird ein Kraftfahrzeug bereitgestellt. Das Kraftfahrzeug weist eine Brennkraftmaschine, wie etwa einen Wasserstoff-Verbrennungsmotor und/oder eine oder mehrere Brennstoffzellen auf, sowie ein offenbarungsgemäßes Wasserstoffspeichersystem, welches dazu ausgelegt ist, kryogenen Wasserstoff zu speichern und die Brennkraftmaschine bzw. den Wasserstoff-Verbrennungsmotor und/oder die Brennstoffzelle mit dem kryogenen Wasserstoff zu versorgen. Ein Wasserstoff-Verbrennungsmotor kann etwa als Turbine oder als Hubkolbenmotor ausgebildet sein.

Ein Kryodrucktank ist dabei ein Tank, welcher dazu ausgelegt ist, kryogenen bzw. kryo-komprimierten Wasserstoff bei einem überkritischen Druck zu speichern, sodass der Wasserstoff auf kontrollierte Weise zur Versorgung eines oder mehrerer Verbraucher aus dem Kryodrucktank entnehmbar ist. Weitere Merkmale, welche ein Kryodrucktank aufweisen kann, sind beispielsweise in der WO 2013/143773 A1 beschrieben.

Ein Kryodrucktank kann dabei insbesondere ein Tank sein, welcher zur Speicherung von kryo-komprimiertem gasförmigen Wasserstoff unter hohem Druck geeignet und/oder ausgelegt sein. Ein Kryodrucktank kann auch als $CcH_2$ CRYOGAS Tank bezeichnet werden.

Die Initialdichte und der Initialdruck sind dabei jene Werte der Dichte bzw. des Drucks des Wasserstoffs, welche der gespeicherte Wasserstoff im vorliegenden Zustand, insbesondere in befülltem Zustand, aufweist. Der vorbestimmte Mindestdruck kann dabei ein solches Maß für den Druck des Wasserstoffs sein, welches der entnommene Wasserstoff aufweisen muss, um den einen oder die mehreren Verbraucher damit versorgen zu können. Für die Versorgung einer Brennstoffzelle mit Wasserstoff kann optional ein vorbestimmter Mindestdruck in einem Bereich von 5 bar bis 15 bar erforderlich sein. Für die Versorgung einer Brennkraftmaschine, wie etwa für einen Wasserstoff-Verbrennungsmotor, kann optional ein vorbestimmter Mindestdruck in einem Bereich von 8 bar bis 50 bar erforderlich sein. So kann etwa mindestens eine Brennstoffzelle und/oder mindestens eine Brennkraftmaschine als Verbraucher angeschlossen sein, welche für den korrekten Betrieb eine Zufuhr von Wasserstoff mit einem systembedingten Mindestdruck benötigen. Dieser kann den vorbestimmten Mindestdruck darstellen oder diesen beeinflussen. Sofern zwischen dem Auslass des Wasserstoffs aus dem Kryodrucktank und dem einen oder den mehreren Verbrauchern ein Druckabfall zu erwarten ist, kann der vorbestimmte Mindestdruck für den im Kryodrucktank gespeicherten Wasserstoff von dem systembedingten Mindestdruck des Verbrauches bzw. der Verbraucher und von dem zu erwartenden Druckabfall abhängen. Ein Unterschreiten des vorbestimmten Mindestdrucks durch den in dem Kryodrucktank gespeicherten Wasserstoff kann daher dazu führen, dass entnommener Wasserstoff nicht oder nicht vollständig von dem bzw. den Verbrauchern verbraucht werden kann. Dies kann zur Folge haben, dass ein ordnungsgemäßer Betrieb des Verbrauchers nicht mehr möglich ist und/oder der Verbraucher dadurch beschädigt wird, wie in der folgenden Veröffentlichung beispielhaft beschrieben wird.

C.M. Rangel et al.: "Fuel Starvation: Irreversible Degradation Mechanisms in PEM Fuel Cells", WHEC 2010, Essen, Deutschland, Session Title/No. Electrochemistry of PEM Fuel Cells/FC. 1 (4. Juni 2014).

Das Regeln der Wärmezufuhr in den Kryodrucktank dient dabei dazu, den im Kryodrucktank gespeicherten kryogenen Wasserstoff kontrolliert zu erwärmen, so dass er sich ausbreitet und auf diese Weise den Druck des Wasserstoffs zu erhöhen. Mittels der Regelung des Wärmeeintrags kann somit der Druckverlauf des gespeicherten Wasserstoffs im Kryodrucktank beeinflusst werden. Für die Wärmezufuhr kann optional im Kryodrucktank ein Wärmetauscher ausgebildet sein, wie beispielsweise in der WO 2013/143773 A1 beschrieben.

Ein Wärmezufuhrelement kann dabei optional einen Wärmeübertrager bzw. einen Wärmetauscher aufweisen oder als solcher ausgebildet sein. Der Wärmetauscher kann dabei innerhalb des Kryodrucktanks angeordnet sein, um Wärme eines durch den Wärmetauscher strömenden Fluids auf den im Kryodrucktank gespeicherten Wasserstoff zu übertragen.

Das Verfahren zum Betrieb des Kryodrucktanks kann dabei insbesondere ein Verfahren für die kontrollierte Entnahme von Wasserstoff aus dem Kryodrucktank bzw. für eine kontrollierte Entleerung des Kryodrucktanks umfassen.

Das Planen des angestrebten Druckverlaufs kann dabei ein Bestimmen einer Vorgabe für das Regeln der Wärmezufuhr umfassen, um bei fortschreitender Entleerung ein Maß für den angestrebten Druckverlauf des Wasserstoffs im Kryodrucktank vorzugeben. Das Planen des angestrebten Druckverlaufs bedeutet ferner, dass aktiv ein angestrebter Druckverlauf ermittelt wird und Vorgaben für die Regelung bereitgestellt werden, mittels welcher der angestrebte Druckverlauf erreicht werden soll, anstatt eine unkontrollierte Entwicklung des Druckverlaufs geschehen zu lassen.

Das Regeln der Wärmezufuhr kann dabei ein Regeln und/oder Steuern der Wärmezufuhr umfassen. Insbesondere kann das Regeln der Wärmezufuhr ein Regeln und/oder Steuern einer Öffnung einer Ventileinheit umfassen, welches einen Strom eines Wärmeträgers durch den optional im Kryodrucktank angeordneten Wärmetauscher reguliert. Die Ventileinheit kann dabei dazu ausgebildet sein, den Strom des Wärmeträgers durch die Ventileinheit graduell anzupassen, d.h. eine Durchflussmenge durch eine variable Öffnung der Ventileinheit zu regulieren. Alternativ kann die Ventileinheit derart ausgebildet sein, dass diese nur einen geöffneten und geschlossenen Zustand aufweist. In diesem Fall kann das Regeln der Wärmezufuhr durch ein zeitliches Steuern bzw. Regeln der Öffnung der Ventileinheit erfolgen.

Dass das Regeln der Wärmezufuhr in den Kryodrucktank während zumindest 70% des Vorgangs zur vollständigen Entnahme erfolgt, kann dabei bedeuten, dass zumindest während 70% des Vorgangs zur vollständigen Entnahme regelmäßig der Druck des Wasserstoffs im Kryodrucktank als Regelgröße gemessen wird und bei Bedarf die Wärmezufuhr angepasst wird. Dass das Regeln der Wärmezufuhr in den Kryodrucktank zur vollständigen Entnahme erfolgt, kann dabei ferner bedeuten, dass für die zumindest 70% des Vorgangs zur vollständigen Entnahme und optional für den gesamten Vorgang zur vollständigen Entnahme der angestrebte Druckverlauf vorgegeben ist und die Regelung der Wärmezufuhr dazu eingerichtet ist, diesen zu erreichen, anstatt wie herkömmlich nur bei Erreichen eines vorbestimmten Mindestdrucks oder aus anderen Gründen, etwa zur Aufnahme von externer Abwärme, tätig zu werden. Dass das Regeln der Wärmezufuhr in den Kryodrucktank während zumindest 70% des Vorgangs zur vollständigen Entnahme erfolgt, bedeutet hingegen nicht notwendigerweise, dass während der zumindest 70% des Vorgangs zur vollständigen Entnahme permanent eine Variation der Wärmezufuhr zu erfolgen hat.

Die Offenbarung bietet zudem den Vorteil, dass eine Gefahr für eine unerwünschte Verflüssigung des gespeicherten Wasserstoffs reduziert werden kann. Eine Verflüssigung kann herkömmlicherweise dann auftreten, wenn der Druck bei der Entnahme ungeregelt unterhalb den kritischen Druck von 12,84 bar fallen würde, während der Wasserstoff noch tiefkalt ist. Der gespeicherte Wasserstoff könnte dann herkömmlicherweise durch Unterschreiten der Zweiphasen-Sättigungsgrenze vom einphasigen überkritischen CRYOGAS zu einem zweiphasigen Gas-Flüssiggemisch übergehen, was mit den Nachteilen der Zweiphasigkeit verbunden wäre. Dies kann durch den Gegenstand der unabhängigen Ansprüche vermieden werden. Auch bietet die Offenbarung den Vorteil, dass keine Notwendigkeit für einen Einsatz eines teuren und schwer wartbaren Füllstandssensors besteht. Dadurch können die Komplexität des Wasserstoffspeichersystems und die Kosten für die Herstellung und/oder den Betrieb und/oder die Wartung gering gehalten werden. Insbesondere bietet die Offenbarung zudem den Vorteil, dass es zu keinem rapiden Druckabfall bei der anfänglichen Entnahme von Wasserstoff aus dem befüllten Kryodrucktank kommt und entsprechend der thermodynamische Zustand des gespeicherten Wasserstoffs einen sicheren Abstand von der Zweiphasengrenze aufweisen kann, bei welchem es zu einem Übergang zumindest eines Teils des gespeicherten Wasserstoffs in die flüssige Phase kommt. Ferner bietet die Offenbarung den Vorteil, dass aufgrund eines sicheren Abstands des thermodynamischen Zustands des Wasserstoffs von der Zweiphasengrenze und insbesondere vom kritischen Punkt Messfehler bei der Messung der Temperatur nicht zu einer starken Unter- oder Überschätzung der Speicherkapazität führen, wie sie ansonsten herkömmlicherweise durch die hohe Abhängigkeit der Dichte von der Temperatur im Bereich der Zweiphasengrenze und insbesondere des kritischen Punkts auftreten würden.

Die Offenbarung bietet ferner den Vorteil, dass während eines Großteils des Vorgangs zur vollständigen Entnahme des Wasserstoffs aus dem Kryodrucktank zudem der Druck in einem sicheren Abstand vom Mindestdruck gehalten werden kann und auf diese Weise ein Absinken des Drucks unterhalb des Mindestdrucks vermieden werden kann. Zudem kann dies den Vorteil bieten, dass ein fortlaufender Eingriff der Regelung der Wärmezufuhr nicht notwendigerweise erforderlich ist, um ein Absinken des Drucks unterhalb des Mindestdrucks zu vermeiden. So kann die Offenbarung zusätzlich den Vorteil bieten, dass die Anzahl von Ventilschaltvorgängen für die Regelung der Wärmezufuhr reduziert oder gar minimiert werden können. Dadurch kann ein etwaiger Verschleiß der Ventileinheit reduziert und entsprechend ein erforderliches Wartungsintervall und/oder eine Lebensdauer der Ventileinheit verlängert werden. Dies kann insbesondere dann vorteilhaft sein, wenn die Ventileinheit in einem Vakuumbereich angeordnet ist und die Wartung der Ventileinheit ein Fluten bzw. Belüften des Vakuumbereichs erfordern würde. Als sicherer Abstand des Drucks von der Zweiphasengrenze ist dabei eine solche Druckdifferenz zwischen dem vorherrschenden Druck des Wasserstoffs und dem Druck, bei dem ein Erreichen oder Überschreiten der Zweiphasengrenze eintritt, zu verstehen, welche eine Änderung des Drucks um 10% erlaubt, ohne dass die Zweiphasengrenze erreicht wird. Als sicherer Abstand des Drucks vom Mindestdruck ist dabei eine solche Druckdifferenz zwischen dem vorherrschenden Druck des Wasserstoffs und dem vorbestimmten Mindestdruck zu verstehen, welche eine Änderung des Drucks um 10% erlaubt, ohne dass der Mindestdruck erreicht oder unterschritten wird.

Die Offenbarung ermöglicht somit, dass das Planen des angestrebten Druckverlaufs optional derart erfolgen kann, dass ein Abstand des thermodynamischen Zustands des im Kryodrucktank gespeicherten Wasserstoffs von der Zweiphasengrenze des Wasserstoffs ausreichend hoch oder gar maximal ist und/oder einen vorbestimmten Schwellwert nicht unterschreitet. In diesem Zusammenhang kann die Offenbarung den Vorteil bieten, dass Schwankungen der Temperatur ein geringeres Risiko darstellen, ins Zweiphasengebiet abzurutschen. Da herkömmlicherweise im Zweiphasengebiet und nahe der Grenzlinie zum Zweiphasengebiet geringe Abweichungen beim Messen des Drucks und/oder der Temperatur des im Kryodrucktank gespeicherten Wasserstoffs erhebliche Abweichungen bei der Bestimmung der im Kryodrucktank gespeicherten Restmenge an Wasserstoff zur Folge haben können, bietet die Beabstandung des thermodynamischen Zustands des Wasserstoffs gemäß der Offenbarung erhebliche Vorteile für die zuverlässige Bestimmung der Restmenge und somit der Bestimmung der verbleibenden Reichweite eines Fahrzeugs, dessen Antrieb mit dem Wasserstoff versorgt wird. Dadurch dass der thermodynamische Zustand des Wasserstoffs vom Zweiphasengebiet beabstandet gehalten werden kann, kann somit das Auftreten von erheblichen Messfehlern bei der Bestimmung der Restmenge von im Kryodrucktank gespeichertem Wasserstoff vermieden werden.

Auch kann die Offenbarung den Vorteil bieten, dass das Risiko vermieden werden kann, in einen thermodynamischen Bereich einzutreten, in welchem die technischen Mittel zur Wärmezufuhr nicht ausreichend sind, dem Wasserstoff die benötigte Wärme zuzuführen. Während bei herkömmlichen Regelverfahren bei geringen Dichten nahe dem leeren Tankzustand (d.h. nahe einer minimalen Dichte des gespeicherten Wasserstoffs) ein Fall eintreten kann, bei welchem sich der benötigte Wärmezufluss und der bereitstellbare Wärmezufluss gegenläufig entwickeln und somit der benötigte Wärmezufluss den verfügbaren Wärmezufluss übersteigen kann, ist dies bei Verwendung eines offenbarungsgemäßen Regelverfahrens nicht zwingend der Fall. Dies liegt daran, dass sich durch die offenbarungsgemäße Regelung durch eine frühzeitige Wärmezufuhr bereits bei höheren Dichten der benötigte Wärmezufluss und der bereitstellbare Wärmezufluss auch bei geringen Dichten qualitativ gleichartig entwickeln.

Außerdem kann die Offenbarung den Vorteil bieten, dass bei niedrigen Füllständen und insbesondere am Ende eines Entleerungsvorgangs ein Druckabfall vermieden werden kann und auf diese Weise die für eine Entnahme zur Verfügung stehende Menge an Wasserstoff erhöht bzw. die Dichte reduziert werden kann.

Außerdem kann die Offenbarung den Vorteil bieten, dass ein Entnahmestrom von Wasserstoff aus dem Kryodrucktank zuverlässig über einem Mindestwert gehalten werden kann. Optional kann der Entnahmestrom auf oder über einem Mindestwert von 2,5 g/s über den gesamten Entnahmevorgang gehalten werden. Optional kann der Entnahmestrom auf oder über einem Wert von 5 g/s oder 9 g/s über den gesamten Entnahmevorgang gehalten werden.

Zudem kann die Offenbarung den Vorteil bieten, dass gemäß dem offenbarungsgemäßen Regelungsverfahren die meiste Wärmezufuhr dann zugeführt wird, wenn der Kryodrucktank voll ist (anders als in herkömmlichen Verfahren, bei denen die meiste Wärmezufuhr dann zugeführt wird, wenn der Tank nahezu leer ist). Dies erleichtert das Erwärmen des Wasserstoffs, da der gespeicherte Wasserstoff bei einem vollen Tank kälter ist als bei einem weitgehend leeren Tank und somit die Wärme besser übertragen werden kann. Zudem weist der Wasserstoff bei nahezu vollem Kryodrucktank eine höhere Dichte auf, als in einem nahezu entleerten Zustand, wodurch die Wärmezufuhr ebenfalls begünstigt werden kann.

Optional erfolgt das Regeln der Wärmezufuhr derart, dass der Druckverlauf des Wasserstoffs im Kryodrucktank um nicht mehr als 5% von dem angestrebten Druckverlauf abweicht. Dies bietet die Möglichkeit in einer präzisen Gestaltung und/oder Steuerung des Druckverlaufs. Darüber hinaus können das Planen des angestrebten Druckverlaufs und/oder das Regeln der Wärmezufuhr derart erfolgen, dass der Druckverlauf des Wasserstoffs im Kryodrucktank stets in einem Bereich von ± 20 bar um den angestrebten Druckverlauf liegt, wenn der Kryodrucktank mindestens halb voll ist, d.h. wenn die Dichte des gespeicherten Wasserstoffs im Kryodrucktank mindestens 35 g/L beträgt. Darüber hinaus können das Planen des angestrebten Druckverlaufs und/oder das Regeln der Wärmezufuhr derart erfolgen, dass die tolerierten Abweichungen des Druckverlaufs des Wasserstoffs im Kryodrucktank vom angestrebten Druckverlauf von ± 20 bar bis ± 1 bar abnehmen bei fortschreitender Entleerung des Kryodrucktanks. Die fortschreitende Entleerung des Kryodrucktanks kann einhergehen mit einer optional linearen Abnahme der Dichte des gespeicherten Wasserstoffs im Kryodrucktank von etwa 35 g/L bis etwa 8 g/L. Dies bietet den Vorteil, dass auch bei Druckverläufen, welche von dem angestrebten Druckverlauf abweichen, eine Überschreitung des zulässigen Maximaldrucks des Kryodrucktanks und eine Unterschreitung des vorgegebenen Mindestdrucks vermieden werden können.

Optional umfasst der Vorgang zur vollständigen Entnahme einen oder mehrere Teilentnahmevorgänge. Mit anderen Worten erfolgt die vollständige Entnahme des Wasserstoffs aus dem Kryodrucktank bzw. die vollständige Entleerung des Kryodrucktanks bis zum Mindestdruck nicht in einem einzigen zusammenhängenden Entnahmevorgang, sondern in mehreren separaten Teilentnahmevorgängen. Optional können der eine bzw. die mehreren Entnahmevorgänge durch Phasen unterbrochen sein, in welchen kein Wasserstoff aus dem Kryodrucktank entnommen wird und das Kraftfahrzeug, in welchem der Kryodrucktank optional installiert ist, ruht. Optional erfolgt das Regeln der Wärmezufuhr in den Kryodrucktank derart, dass der Druckverlauf des Wasserstoffs im Kryodrucktank um nicht mehr als 10% von dem angestrebten Druckverlauf abweicht, während des einen oder der mehreren Teilentnahmevorgänge. Mit anderen Worten kann die Regelung der Wärmezufuhr bzw. das Anstreben des angestrebten Druckverlaufs auf die Teilentnahmevorgänge beschränkt sein. Dies bietet den Vorteil, dass eine Regelung der Wärmezufuhr zur Erreichung des angestrebten Druckverlaufs in den Phasen unterbleiben kann, in denen keine Entnahme von Wasserstoff erfolgt. Das Regeln der Wärmezufuhr in den Kryodrucktank kann optional derart erfolgen, dass eine Abweichung des Druckverlaufs des Wasserstoffs im Kryodrucktank vom angestrebten Druckverlauf minimal ist. Mit anderen Worten kann die Regelung dahingehend optimiert werden, dass der tatsächliche Druckverlauf möglichst nahe am angestrebten Druckverlauf ist.

Optional umfasst das Verfahren ferner ein Messen einer Temperatur und eines Drucks des im Kryodrucktank befindlichen Wasserstoffs, sowie ein Ermitteln des Initialdrucks und der Initialdichte auf Basis der gemessenen Temperatur und des gemessenen Drucks. Die ermittelten Werte des Initialdrucks und der Initialdichte können sodann der Planung des angestrebten Druckverlaufs zugrunde gelegt werden. Auf diese Weise kann die Planung des angestrebten Druckverlaufs mit hoher Präzision erfolgen.

Optional erfolgt das Planen des angestrebten Druckverlaufs derart, dass die Druckabnahme des Wasserstoffs im Kryodrucktank hin zum Mindestdruck über den gesamten Vorgang zur vollständigen Entnahme monoton ist. Optional erfolgt das Planen des angestrebten Druckverlaufs derart, dass die Druckabnahme des Wasserstoffs im Kryodrucktank hin zum Mindestdruck über den gesamten Vorgang zur vollständigen Entnahme linear ist. Dies bietet den Vorteil, dass über den gesamten Vorgang zur vollständigen Entnahme ein sicherer Abstand des thermodynamischen Zustands von der Zweiphasengrenze eingehalten werden kann und entsprechend ein Risiko eines Übergangs eines Teils des Wasserstoffs in die flüssige Phase reduziert werden kann. Außerdem kann dies den Vorteil bieten, dass der Druck des gespeicherten Wasserstoffs über den Großteil des Vorgangs zur vollständigen Entnahme in einem sicheren Abstand zum Mindestdruck gehalten werden kann und entsprechend ein Risiko des Unterschreitens des Mindestdrucks reduziert werden kann. Zudem kann dies den Vorteil bieten, dass durch den linearen Druckverlauf die größtmögliche Massenflussrate von Wasserstoff aus dem Kryodrucktank unter Limitierung durch eine vorgegebene maximale Wärmezufuhr erreicht werden kann. Außerdem kann dadurch erreicht werden, dass aufgrund des linearen Druckverlaufs die zur Verfügung stehende maximale Wärmezufuhr und die für die Regelung des Druckverlaufs erforderliche Wärmezufuhr einen gleichen oder ähnlichen Verlauf aufweisen, anstatt wie herkömmlich einen gegenläufigen Verlauf bei niedrigen Dichten, sodass Engpässe bei der zur Verfügung stehenden Wärmezufuhr vermieden werden können.

Das Planen des angestrebten Druckverlaufs kann dabei optional ein Vorgeben einer angestrebten Änderung des Drucks in Abhängigkeit von der Dichte und/oder Temperatur des im Kryodrucktank befindlichen Wasserstoffs umfassen. Insbesondere kann die angestrebte Änderung des Drucks in Abhängigkeit von der Dichte und/oder Temperatur optional als konstanter Druckgradient vorgegeben werden. Das Regeln der Wärmezufuhr kann optional die angestrebte Änderung des Drucks in Abhängigkeit von der Dichte und/oder Temperatur und, sofern verfügbar, den konstanten Druckgradienten als Führungsgröße verwenden. Dies bietet die Möglichkeit, den monotonen bzw. linearen Druckverlauf mit geringem Aufwand in die Regelung zu implementieren und entsprechend eine geeignete Regelung für das Anstreben des angestrebten Druckverlaufs ohne zusätzlichen Hardwareaufwand zu realisieren. Die Abhängigkeit der Änderung des Drucks von der Dichte und/oder Temperatur kann dabei optional auch durch eine Abhängigkeit des Drucks von einer anderen Größe berücksichtigt werden, welche wiederum mit der Dichte bzw. Temperatur in Zusammenhang steht oder von der Dichte bzw. Temperatur abhängt.

Das Planen des angestrebten Druckverlaufs kann optional derart erfolgen, dass die Druckabnahme des Wasserstoffs im Kryodrucktank hin zum Mindestdruck über den gesamten Vorgang zur vollständigen Entnahme einer vorbestimmten Polynomfunktion oder einer vorbestimmten Exponentialfunktion folgt. Dies bietet den Vorteil, dass ein sicherer Abstand des Drucks des gespeicherten Wasserstoffs von der Zweiphasengrenze und/oder von dem Mindestdruck während des Vorgangs zur vollständigen Entnahme erreicht werden kann.

Das Planen des angestrebten Druckverlaufs kann optional derart erfolgen, dass eine Anzahl von Phasen der Wärmezufuhr in den Kryodrucktank minimal ist. Dies bietet den Vorteil, eine Anzahl der Schaltvorgänge einer Ventileinheit für die Wärmezufuhr minimiert werden kann. Dadurch kann ein etwaiger Verschleiß der Ventileinheit geringgehalten werden und entsprechend die Wartungsintervalle und/oder die Lebensdauer der Ventileinheit verlängert werden. Dies kann insbesondere dann vorteilhaft sein, wenn die Ventileinheit schwer zugänglich ist, etwa wenn die Ventileinheit in einem Vakuumbereich angeordnet ist und für die Wartung der Ventileinheit der Vakuumbereich belüftet bzw. geflutet werden muss.

Das Planen des angestrebten Druckverlaufs kann optional derart erfolgen, dass die Druckabnahme des Wasserstoffs im Kryodrucktank hin zum Mindestdruck über den gesamten Vorgang zur vollständigen Entnahme einen stufenförmigen Verlauf aufweist. Dies kann den Vorteil bieten, dass dadurch die Anzahl der Phasen der Wärmezufuhr und/oder die Anzahl der Schaltvorgänge der Ventileinheit geringgehalten werden können.

Optional kann das Regeln der Wärmezufuhr in den Kryodrucktank ferner derart erfolgen, dass der Druckverlauf des Wasserstoffs im Kryodrucktank einen vorbestimmten Maximaldruck des Kryodrucktanks nicht überschreitet und/oder den Mindestdruck nicht unterschreitet. Dies bietet den Vorteil, dass eine Beschädigung des Kryodrucktanks vermieden und die Bereitstellung des Wasserstoffs bei einem für den Verbraucher geeigneten Druck sichergestellt werden können.

Das Planen des angestrebten Druckverlaufs kann ein Vorgeben eines Toleranzbereichs um den angestrebten Druckverlauf umfassen, wobei der Toleranzbereich den angestrebten Druckverlauf einschließt und im Bereich des Initialdrucks durch den vorbestimmten Maximaldruck des Kryodrucktanks nach oben begrenzt ist und im Bereich des Mindestdrucks durch den Mindestdruck nach unten begrenzt ist. Mit anderen Worten kann ein Toleranzbereich angegeben werden, welcher sich in asymmetrischer Weise um den angestrebten Druckverlauf erstreckt. Dabei kann bei hohen Füllständen des Kryodrucktanks und entsprechend hohen Drücken der angestrebte Druckverlauf im oberen Bereich des Toleranzbereichs liegen, während bei niedrigen Füllständen des Kryodrucktanks und entsprechenden niedrigeren Drückender angestrebte Druckverlauf im unteren Bereich des Toleranzbereichs liegt. Dies bietet den Vorteil, dass eine Abweichung des Druckverlaufs jeweils in jene Richtung großzügiger toleriert wird, in welcher sich der Druckverlauf keinem kritischen Druckbereich nähert.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst. Insbesondere sind die Offenbarungen betreffend das Verfahren auch als jeweils für die Steuereinheit, das Wasserstoffspeichersystem und das Kraftfahrzeug offenbart anzusehen und umgekehrt.

Wenngleich die vorliegende Offenbarung zum Teil auf die Speicherung und Entnahme von kryo-komprimiertem Wasserstoff gerichtet ist, ist diese auch als auf die Speicherung und Entnahme von anderen kryo-komprimierten Gasen gerichtet anzusehen.

Weitere Einzelheiten und Vorteile sollen nun anhand der folgenden Beispiele und optionalen Ausführungsformen mit Bezug auf die Figuren näher erläutert werden.

Es zeigen:

Figur 1 ein Kraftfahrzeug in einer schematischen Darstellung mit einem Wasserstoffspeichersystem gemäß einer optionalen Ausführungsform;

Figur 2 ein Wasserstoffspeichersystem gemäß einer optionalen Ausführungsform in einer detaillierten Ansicht;

Figur 3 ein Verfahren zum Betrieb eines Kryodrucktanks anhand einer schematischen Skizze;

Figuren 4A bis 4C einen schematischen Vergleich zwischen herkömmlichen Änderungen des Drucks und einem Druckverlauf bei Anwendung eines Verfahrens zum Betrieb eines Kryodrucktanks gemäß einer optionalen Ausführungsform der Offenbarung;

Figuren 5A und 5B einen schematischen Vergleich zwischen einem herkömmlichen Regler (Figur 5A) und einem Druckregler gemäß einer optionalen Ausführungsform zur Regelung der Wärmezufuhr;

Figur 5C: eine Illustration eines Iterationsverfahrens;

Figur 5D: eine Illustration einer Regelung;

Figur 5E: einen Graphen zur Illustration einer Regelung;

Figur 5F: eine bildliche Darstellung einer Regelung;

Figuren 6A bis 6D beispielhaft verschiedene optionale Verlaufsformen des angestrebten Druckverlaufs;

Figur 7 eine Erläuterung einer optionalen Ausführungsform eines offenbarungsgemäßen Verfahrens zur Regelung der Wärmezufuhr anhand eines Temperatur-Dichte-Diagramms;

Figuren 8A und 8B einen Vergleich des Wärmeflusses gegenüber der Dichte des im Kryodrucktank 16 gespeicherten Wasserstoffs mit invertiertem Vorzeichen;

Figuren 9A und 9B einen entsprechenden Temperaturverlauf des Wasserstoffs im Kryodrucktank für den in den Figuren 8A und 8B gezeigten Vergleich.

In den folgenden Figuren werden gleiche oder ähnliche Elemente in den verschiedenen Ausführungsformen der Einfachheit halber mit gleichen Bezugszeichen bezeichnet.

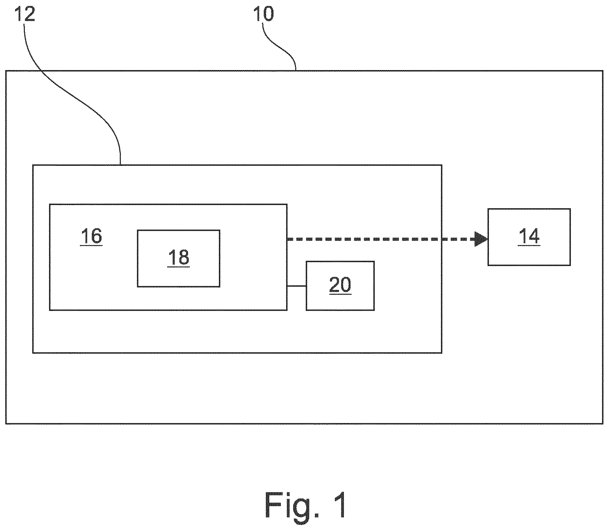

Figur 1 zeigt in einer schematischen Darstellung ein Kraftfahrzeug 10 mit einem Wasserstoffspeichersystem 12 gemäß einer optionalen Ausführungsform und einem Verbraucher 14. Der Verbraucher kann optional eine oder mehrere Brennstoffzellen und/oder eine oder mehrere Brennkraftmaschinen umfassen. Das Wasserstoffspeichersystem 12 ist dabei zur Speicherung von kryogenem Wasserstoff zur Versorgung des Verbrauchers 14 mit Wasserstoff ausgestattet. Das Wasserstoffspeichersystem 12 umfasst einen Kryodrucktank 16, welcher dazu ausgelegt ist, Wasserstoff bei einem überkritischen Initialdruck und mit einer Initialdichte zu speichern. Zudem weist das Wasserstoffspeichersystem 12 ein Wärmezufuhrelement 18 auf, welches dazu ausgelegt ist, dem im Kryodrucktank 16 gespeicherten Wasserstoff Wärme zuzuführen. Außerdem weist das Wasserstoffspeichersystem 12 eine Steuereinheit 20 auf, welche dazu eingerichtet ist, die folgenden Schritte durchzuführen: (i) Einstellen eines angestrebten Druckverlaufs über einen Vorgang zur vollständigen Entnahme des bei dem Initialdruck und der Initialdichte im Kryodrucktank 16 gespeicherten Wasserstoffs hin zu einer vorbestimmten Mindestdichte bei einem Mindestdruck des Wasserstoffs in entleertem Zustand des Kryodrucktanks 16 derart, dass sich eine Druckabnahme des Wasserstoffs im Kryodrucktank 16 hin zum Mindestdruck über den gesamten Vorgang zur vollständigen Entnahme erstreckt. (ii) Regeln einer Wärmezufuhr in den Kryodrucktank 16 mittels des Wärmezufuhrelements 18 während zumindest 70% des Vorgangs zur vollständigen Entnahme derart, dass der Druckverlauf des Wasserstoffs im Kryodrucktank 16 um nicht mehr als 10% von dem angestrebten Druckverlauf abweicht.

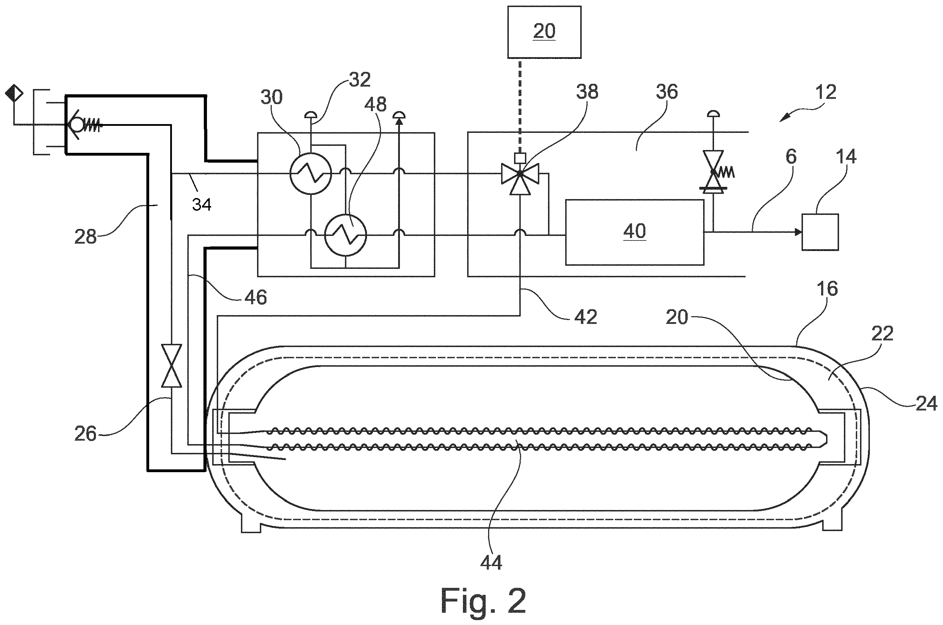

Figur 2 zeigt ein Wasserstoffspeichersystem 12 gemäß einer optionalen Ausführungsform in einer detaillierteren Ansicht. Dieses weist einen Kryodrucktank 16 auf, welcher inklusive optionaler weiterer Komponenten dargestellt ist. Das Wasserstoffspeichersystem kann dabei auf einem herkömmlichen Kryodrucktank 16 basieren, wie in der WO 2013/143773 A1 beschrieben. Im Kryodrucktank 16 kann kryogener Wasserstoff zur Versorgung eines Verbrauchers 14, beispielsweise einer Brennkraftmaschine, welche optional als Wasserstoff-Verbrennungsmotor ausgebildet sein kann, und/oder einer Brennstoffzelle des Kraftfahrzeugs 10, unter Absolutdruckwerten des Tank-Innendrucks in der Größenordnung von 150 bar oder mehr, zumindest jedoch unter überkritischem Druck bei 13 bar und mehr, gespeichert werden. Dieser Kryodrucktank 16 kann einen druckfesten Innentank 20 aufweisen, innerhalb dessen sich der kryogene Wasserstoff im überkritischen Zustand befindet, zudem eine den Innentank 20 umgebende Isolationsschicht 22, in der im wesentlichen Vakuum vorliegen kann, d.h. ein Druck kleiner als 1 mbar, sowie eine dieses Vakuum einschließenden Außenhülle 24. Über eine kombinierte und somit einflutige Befüll- und Entnahmeleitung 26 kann der Innentank 20 mit kryogenem Wasserstoff im überkritischen Zustand befüllt werden und es kann über diese Befüll-Entnahmeleitung 26, die in einer Kryo-Ventileinheit 28 mündet, Wasserstoff aus dem Innentank 20 entnommen werden. Hierfür kann an die Kryo-Ventileinheit 28 ein erster bzw. externer Wärmetauscher 30 angeschlossen sein, durch den einerseits ein erster Wärmeträgerkreislauf 32 und zweitens eine von der Kryo-Ventileinheit 28 abgehende sich dabei an die Befüll- Entnahmeleitung 26 anschließende Versorgungsleitung 34 geführt ist, die letztlich zum bereits genannten Verbraucher 14 führt. Über den Wärmetauscher 30 kann die Versorgungsleitung 34 mit dem ersten Wärmeträgerkreislauf 32 in wärmeübertragender Verbindung stehen, so dass der in der Versorgungsleitung 34 geführte Wasserstoff im externen ersten Wärmetauscher 30 erwärmt wird.

Im Anschluss an den externen ersten Wärmetauscher 30 kann die Versorgungsleitung 34 in eine zweite Ventileinheit 36 geführt werden, durch welche die Versorgungsleitung 34 unter Passieren eines Regelventils 38 sowie einer Druckanpassungseinheit 40 hindurchgeführt ist, ehe sie zum Verbraucher 14 gelangt. Dabei kann vom Regelventil 38 eine Zweigleitung 42 abzweigen, durch die aus dem Kryodrucktank 16 entnommener und im ersten (externen) Wärmetauscher 30 erwärmter Wasserstoff in einen zweiten, innerhalb des Innentanks 20 des Kryodrucktanks 16 vorgesehenen (internen) Wärmetauscher 44 eingeleitet werden kann. Nach Durchströmen dieses zweiten, innerhalb des Kryodrucktanks 16, genauer innerhalb von dessen Innentank 20 angeordneten Wärmetauschers 44 kann dieser Wasserstoff über eine Rückführleitung 46 in die Versorgungsleitung 34 stromab des Abzweigs der Zweigleitung 42 eingeleitet werden, wobei diese Rückführleitung 46 zuvor durch einen dem ersten (externen) Wärmetauscher 30 parallel geschalteten und vom gleichen Wärmeträgerkreislauf 32 versorgten dritten (externen) Wärmetauscher 48 hindurch geführt ist, in dem der im zweiten internen Wärmetauscher 44 abgekühlte Wasserstoff durch Wärmetausch mit dem genannten Wärmeträgerkreislauf 32 wieder erwärmt wird. Es kann also der durch die Zweigleitung 42 sowie den zweiten internen Wärmetauscher 44 und die Rückführleitung 46 geführte Wasserstoff als Wärmeträgermittel zur Erwärmung des im Kryo-Drucktank 16 gespeicherten Wasserstoffs dienen.

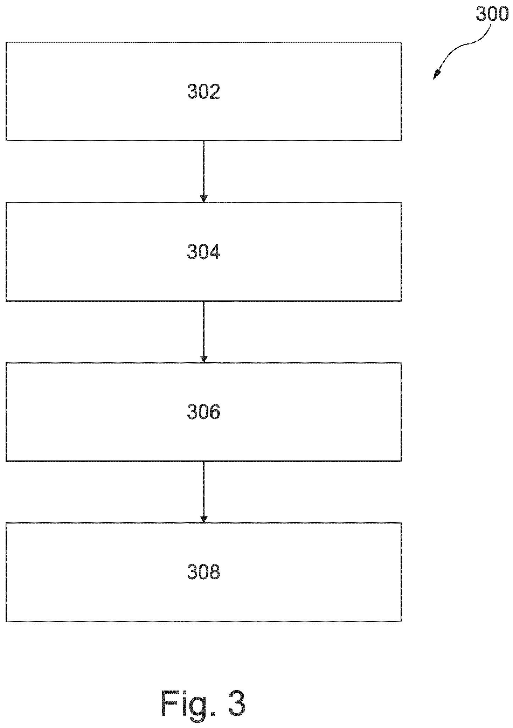

Dabei kann die Steuerung bzw. Regelung dieser Erwärmung durch die Zufuhr von besagtem Wärmeträgermittel bzw. Wasserstoff zum internen Wärmetauscher 44 und somit durch eine geeignete Schaltstrategie des Regelventils 38 gesteuert bzw. geregelt werden. Die Steuerung bzw. Regelung des Regelventils 38 und somit der Wärmezufuhr in den Kryodrucktank kann dabei mittels einer offenbarungsgemäßen Steuereinheit 20 erfolgen. Die Steuereinheit 20 kann dabei dazu eingerichtet sein, ein im Folgenden mit Bezug auf Figur 3 beschriebenes Verfahren durchzuführen.

Figur 3 zeigt anhand einer schematischen Skizze ein Verfahren 300 zum Betrieb eines Kryodrucktanks 16, in welchem kryogener Wasserstoff bei einem überkritischen Initialdruck und einer Initialdichte gespeichert ist, zur Versorgung eines Verbrauchers 14 mit aus dem Kryodrucktank 16 entnommenem Wasserstoff.

Das Verfahren umfasst in einem Schritt 302 ein Messen einer Temperatur und eines Drucks des im Kryodrucktank 16 befindlichen Wasserstoffs.

In einem weiteren optionalen Schritt 304 umfasst das Verfahren ein Ermitteln des Initialdrucks und der Initialdichte auf Basis der gemessenen Temperatur und des gemessenen Drucks.

Des Weiteren umfasst das Verfahren 300 in einem weiteren Schritt 306 ein Planen eines angestrebten Druckverlaufs über einen Vorgang zur vollständigen Entnahme des bei dem Initialdruck und der Initialdichte im Kryodrucktank 16 gespeicherten Wasserstoffs hin zu einer vorbestimmten Mindestdichte bei einem Mindestdruck des Wasserstoffs in entleertem Zustand des Kryodrucktanks 16 derart, dass sich eine Druckabnahme des Wasserstoffs im Kryodrucktank 16 hin zum Mindestdruck über den gesamten Vorgang zur vollständigen Entnahme erstreckt. Der Vorgang zur vollständigen Entnahme kann einen oder mehrere Teilentnahmevorgänge umfassen.

Außerdem umfasst das Verfahren 300 in einem weiteren Schritt 308 ein Regeln einer Wärmezufuhr in den Kryodrucktank 16 während zumindest 70% des Vorgangs zur vollständigen Entnahme derart, dass der Druckverlauf des Wasserstoffs im Kryodrucktank 16 um nicht mehr als 10% von dem angestrebten Druckverlauf abweicht. Das Regeln 308 der Wärmezufuhr in den Kryodrucktank 16 kann dabei derart erfolgen, dass der Druckverlauf des Wasserstoffs im Kryodrucktank 16 um nicht mehr als 10% von dem angestrebten Druckverlauf abweicht, während der eine oder die mehreren Teilentnahmevorgänge erfolgen.

Das Planen 306 des angestrebten Druckverlaufs kann dabei derart erfolgen, dass die Druckabnahme des Wasserstoffs im Kryodrucktank 16 hin zum Mindestdruck über den gesamten Vorgang zur vollständigen Entnahme monoton ist. Optional kann das Planen 306 des angestrebten Druckverlaufs derart erfolgen, dass die Druckabnahme des Wasserstoffs im Kryodrucktank 16 hin zum Mindestdruck über den gesamten Vorgang zur vollständigen Entnahme linear ist.

Optional kann das Regeln 308 der Wärmezufuhr in den Kryodrucktank 16 ferner erfolgen, dass der Druckverlauf des Wasserstoffs im Kryodrucktank 16 einen vorbestimmten Maximaldruck des Kryodrucktanks nicht überschreitet und/oder den Mindestdruck nicht unterschreitet. Das Regeln 308 der Wärmezufuhr auf den angestrebten Druckverlauf kann in Abhängigkeit von der Dichte und/oder Temperatur erfolgen. Sofern das Planen 306 derart erfolgt, dass ein konstanter Druckgradient vorgegeben wird, kann dieser als Führungsgröße verwendet werden. Optional kann das Regeln 308 der Wärmezufuhr in den Kryodrucktank derart erfolgen, dass eine Abweichung des Druckverlaufs des Wasserstoffs im Kryodrucktank vom angestrebten Druckverlauf minimal ist.

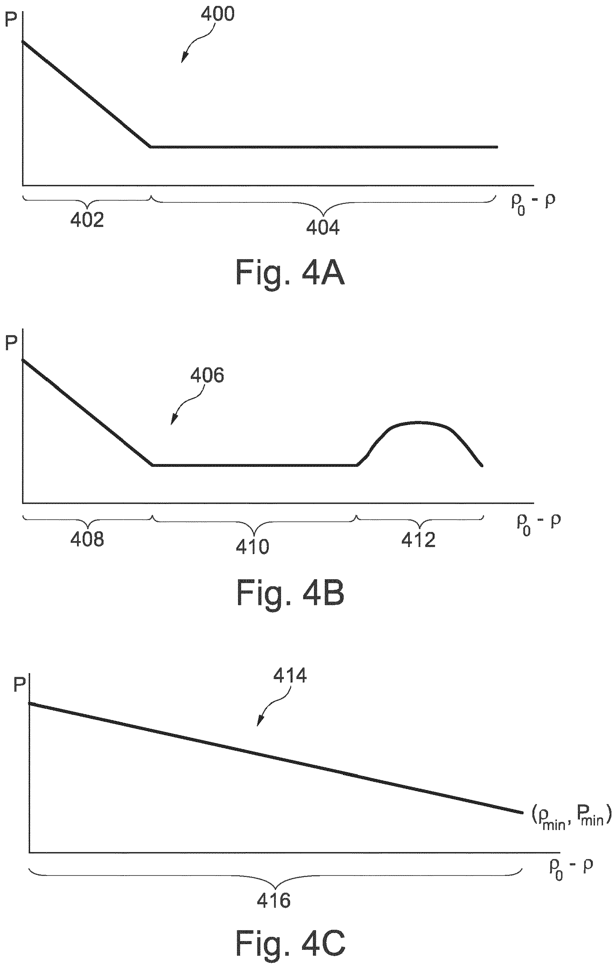

Die Figuren 4A bis 4C zeigen schematisch einen Vergleich zwischen herkömmlichen Änderungen des Drucks P, welchen der im Kryodrucktank 16 gespeicherte Wasserstoff aufweist, in Abhängigkeit von der Dichte des im Kryodrucktank 16 befindlichen Wasserstoffs (Figuren 4A und 4B) und einem Druckverlauf bei Anwendung eines Verfahrens 300 zum Betrieb eines Kryodrucktanks 16 gemäß einer optionalen Ausführungsform der Offenbarung (Figur 4C).

Gemäß dem in Figur 4A gezeigten herkömmlichen Druckverlauf 400 erfolgt in einer ersten Phase 402 der Entnahme von Wasserstoff zunächst ein unkontrollierter Druckabbau bis zu einem Punkt, an welchem der Druck P einen vorbestimmten Mindestdruck erreicht. In einer anschließenden zweiten Phase 404 erfolgt sodann eine Regelung der Wärmezufuhr in den Kryodrucktank 16, sodass der Druck P nicht unter den vorbestimmten Mindestdruck fällt.

Der in Figur 4B gezeigte herkömmliche Druckverlauf 406 entspricht dabei solch einem Druckverlauf, welcher mit einem herkömmlichen Verfahren zur Wärmezufuhr erzielt werden kann, welches in der WO 2009/071208 A1 beschrieben ist. Dabei wird bei geringen Füllständen das Regelventil kontinuierlich offengehalten, wodurch der Druck im Kryodrucktank ansteigt. Dennoch besteht auch bei diesem Druckverlauf 406 zunächst eine erste Phase 408, in der der Druck P kontinuierlich auf den vorbestimmten Mindestwert abfällt und eine zweite Phase 410, in welcher der Druck durch eine Regelung der Wärmezufuhr am Mindestdruck gehalten wird. In der dritten Phase 412 erfolgt dann die vollständige Öffnung des Regelventils.

Figur 4C zeigt einen vorteilhaften Druckverlauf 414, welcher einem offenbarungsgemäßen Verfahren zur Wärmezufuhr gemäß einer optionalen Ausführungsform erzielt werden kann. Dabei wird gemäß der gezeigten Ausführungsform der Druck über den gesamten Dichtebereich 416 geregelt, sodass der Druck nicht zu Beginn auf den Mindestwert abfällt, sondern auf monotone oder gar lineare Weise auf den Mindestdruck bei der Mindestdichte kontrolliert abfällt. Dadurch kann erreicht werden, dass sich der Wasserstoff stets in einem thermodynamischen Bereich befindet, welcher von der Zweiphasengrenze sicher beabstandet ist.

Dabei kann das Planen 306 des angestrebten Druckverlaufs ein Vorgeben einer angestrebten Änderung des Drucks in Abhängigkeit von der Dichte und/oder Temperatur des im Kryodrucktank 16 befindlichen Wasserstoffs und/oder von in damit in festem Zusammenhang stehenden Größen umfassen. Die angestrebte Änderung des Drucks in Abhängigkeit von der Dichte und/oder Temperatur kann dabei optional als konstanter Druckgradient vorgegeben werden.

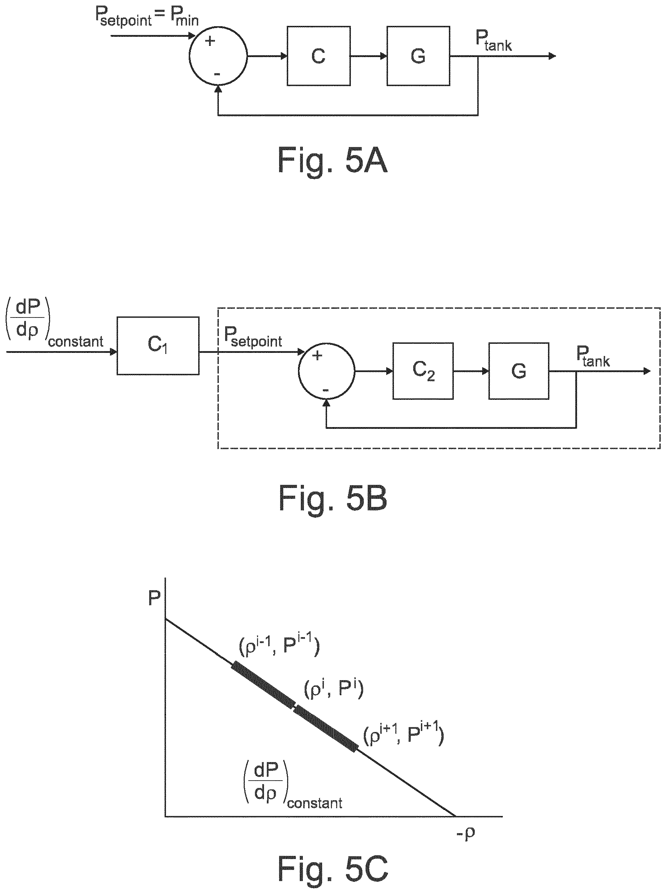

In diesem Zusammenhang zeigen die Figuren 5A und 5B einen schematischen Vergleich zwischen einem herkömmlichen Regler (Figur 5A) und einem Druckregler gemäß einer optionalen Ausführungsform zur Regelung der Wärmezufuhr in den Kryodrucktank 16. Wie in Figur 5A zu sehen ist, wird herkömmlicherweise dem Regelkreis ein als $P_{setpoint}$ bezeichneter fester Druckwert als Führungsgröße vorgegeben, wobei eine Regelung des Drucks im Kryodrucktank $P_{tank}$ erfolgt. Ein derartiger Regelkreis kann auch die Grundlage für den in Figur 5B gezeigten Regler gemäß der optionalen Ausführungsform der Offenbarung darstellen, wie mit der gestrichelten Linie dargestellt ist. Zusätzlich ist der Regler gemäß Figur 5B dazu eingerichtet, mittels des Controllers C1 die dem herkömmlichen Regler zu übergebende Führungsgröße dynamisch zu bestimmen, wobei in diesem Fall ein konstanter Druckgradient (über die Dichte) $\left(\frac{dP}{d\rho}\right)_{constant}$ als Führungsgröße verwendet wird.

Das Bestimmen des konstanten Druckgradienten als Führungsgröße im Controller $C_1$ gemäß Figur 5B kann dabei optional durch das folgende iterative Verfahren erfolgen, welches zudem in Figur 5C bildlich dargestellt ist:

$$gradient = -\frac{P^{i+1} - P^i}{\rho^{i+1} - \rho^i} = \left(\frac{dP}{d\rho}\right)_{constant}$$

$$P^{i+1} = P^i - \left(\frac{dP}{d\rho}\right)_{constant} \left(\rho^{i+1} - \rho^i\right)$$

$$\rho^{i+1} - \rho^i \cong \rho^i - \rho^{i-1}$$

$$P^{i+1} = P^i - \left(\frac{dP}{d\rho}\right)_{constant} \left(\rho^i - \rho^{i-1}\right)$$

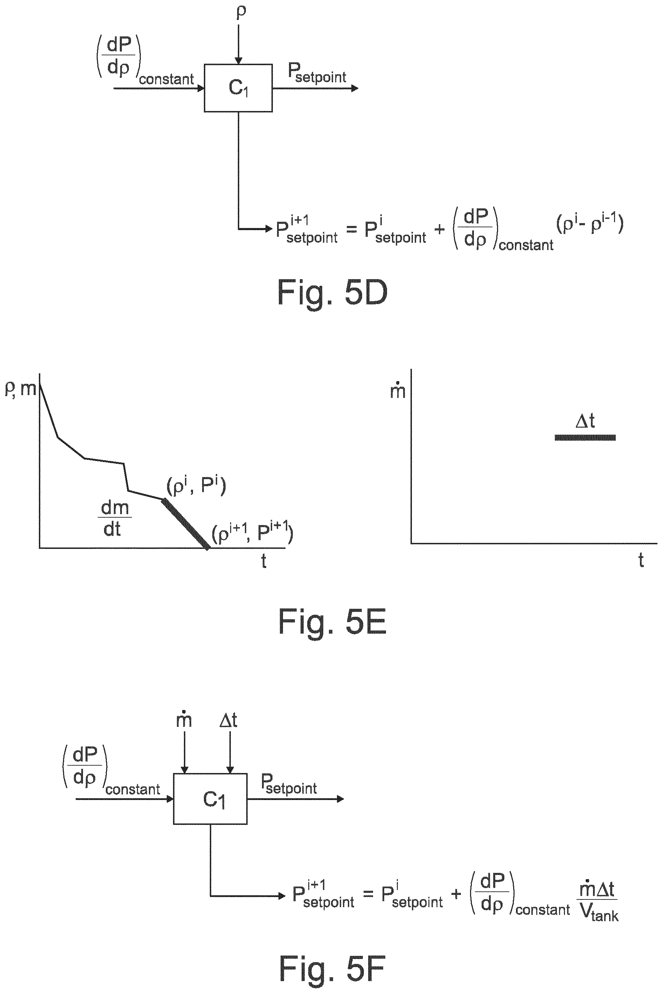

Dabei stehen die Variablen P für den Druck und $\rho$ für die Dichte des Wasserstoffs im Kryodrucktank 16. Der Index i steht für den jeweiligen Iterationsschritt. Figur 5D illustriert die Regelung. Dabei wird die Dichte $\rho$ des

Wasserstoffs im Drucktank bestimmt und dem Controller $C_1$ zugeführt. Dieser erhält zusätzlich den vorbestimmten konstanten Gradienten als Vorgabe und bestimmt unter Verwendung des oben erläuterten Iterationsverfahrens dynamisch den Druckwert $P_{setpoint}$, welche dem herkömmlichen Regelkreis als Führungsgröße vorgegeben wird. Dieses optionale Verfahren zur Regelung der Wärmezufuhr kann auf Basis von Messwerten am Kryodrucktank bestimmt werden, nämlich anhand des Drucks und der Dichte und/oder der Temperatur des im Kryodrucktank 16 gespeicherten Wasserstoffs.

Alternativ oder zusätzlich kann die Regelung der Wärmezufuhr unter Vorgabe eines konstanten Druckgradienten auf Basis von Messwerten betreffend den Verbraucher 14 erfolgen, etwa einer Brennstoffzelle. Dabei können der Massenstrom $\dot{m}$ von aus dem Kryodrucktank 16 zum Verbraucher 14 fließenden Wasserstoff und der ermittelten Zeitspanne $\Delta t$ als Messgrößen verwendet werden. Diese Form der Regelung ist im Folgenden erläutert und in Figur 5E anhand eines Graphen dargestellt

$$\rho^{i+1} - \rho^i = \frac{1}{V_{tank}} \left(m^{i+1} - m^i\right)$$

$$\left(m^{i+1} - m^i\right) = \frac{dm}{dt}\Delta t$$

$$\frac{dm}{dt} = -\dot{m}$$

$$\rho^{i+1} - \rho^i = \frac{-\dot{m}\Delta t}{V_{tank}}$$

$$P^{i+1} = P^i - \left(\frac{dP}{d\rho}\right)_{constant} \left(\rho^i - \rho^{i-1}\right)$$

$$P_{setpoint}^{i+1} = P_{setpoint}^i + \left(\frac{dP}{d\rho}\right)_{constant} \frac{\dot{m}\Delta t}{V_{tank}}$$

Dabei indizieren $V_{tank}$ das Fassungsvolumen des Kryodrucktanks 16, m die Masse an Wasserstoff und $\dot{m}$ den zum Verbraucher fließende Massenstrom von Wasserstoff (Änderung der Masse pro Zeit), und t die Zeit. Figur 5F stellt diese Form der Regelung bildlich dar.

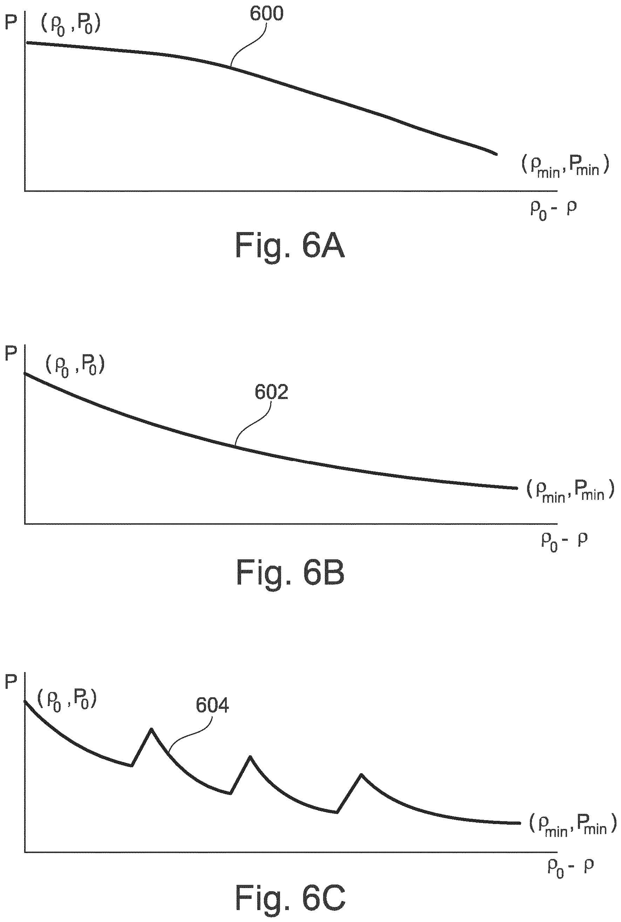

Gemäß anderen optionalen Ausführungsformen kann das Planen des angestrebten Druckverlaufs derart erfolgen, dass die Druckabnahme des Wasserstoffs im Kryodrucktank 16 hin zum Mindestdruck über den gesamten Vorgang zur vollständigen Entnahme einem anderen monotonen Verlauf entsprechend erfolgt. Beispielsweise kann der angestrebte Druckverlauf einer vorbestimmten Polynomfunktion 600 folgen, wie in Figur 6A beispielhaft dargestellt, oder einer vorbestimmten Exponentialfunktion 602 folgen, wie in Figur 6B dargestellt.

Optional kann das Planen des angestrebten Druckverlaufs derart erfolgen, dass eine Anzahl von Phasen der Wärmezufuhr in den Kryodrucktank minimal ist. Dies kann insbesondere dahingehend vorteilhaft sein, dass die Wärmezufuhr über ein Ventil erfolgen kann, welches nur einen geschlossenen und einen geöffneten Zustand aufweist, aber die Durchflussmenge nicht graduell ändern kann. Außerdem kann es dahingehend vorteilhaft sein, die Anzahl der Phasen der Wärmezufuhr zu reduzieren oder zu minimieren, dass die Anzahl der erforderlichen Schaltvorgänge des Ventils reduziert wird und auf diese Weise eine Abnutzung des Ventils verringert und entsprechend die Dauer eines Wartungsintervalls und/oder die Lebensdauer des Ventils erhöht werden kann. Figur 6C zeigt beispielhaft einen Verlauf, in welchem das Planen des Druckverlaufs derart erfolgt, dass lediglich drei Phasen der Wärmezufuhr vorgesehen sind, in welchen der Druck angehoben wird. Zwischen den Phasen der geplanten Wärmezufuhr kann dabei optional eine Überwachung des Drucks erfolgen, ohne dass eine aktive Wärmezufuhr vorgesehen ist. Das Planen des angestrebten Druckverlaufs kann demnach derart erfolgen, dass die Druckabnahme des Wasserstoffs im Kryodrucktank hin zum Mindestdruck über den gesamten Vorgang zur vollständigen Entnahme einen stufenförmigen Verlauf 604 aufweist.

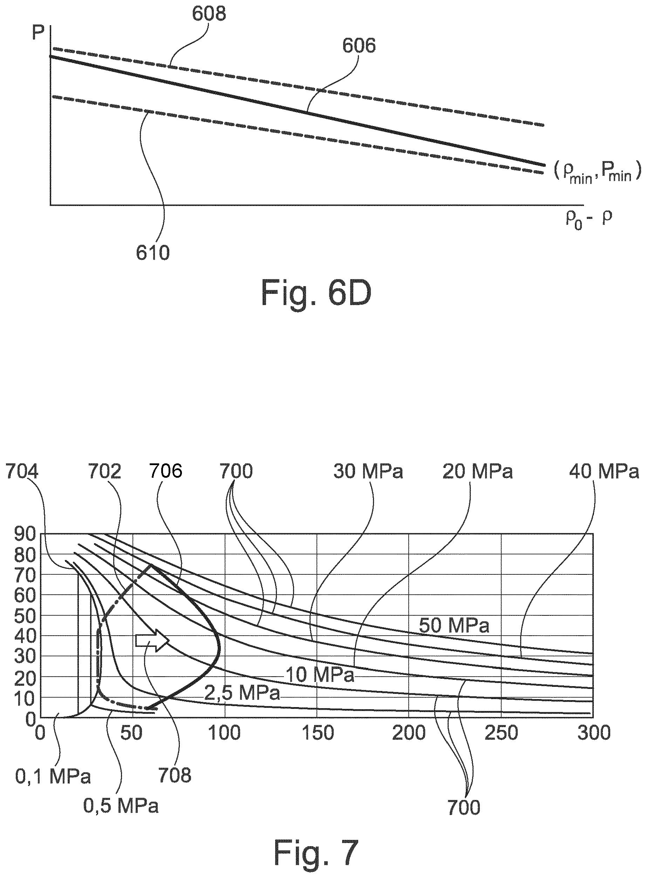

Das Planen 306 des angestrebten Druckverlaufs kann optional ein Vorgeben eines Toleranzbereichs um den angestrebten Druckverlauf umfassen, wobei der Toleranzbereich den angestrebten Druckverlauf einschließt und im Bereich des Initialdrucks durch den vorbestimmten Maximaldruck des Kryodrucktanks nach oben begrenzt ist und im Bereich des Mindestdrucks durch den Mindestdruck nach unten begrenzt ist. Figur 6C zeigt beispielhaft einen angestrebten Druckverlauf. Außerdem kann das Planen 306 des angestrebten Druckverlaufs derart erfolgen, dass ein Abstand des thermodynamischen Zustands des im Kryodrucktank 16 gespeicherten Wasserstoffs von der Zweiphasengrenze des Wasserstoffs maximal ist und/oder einen vorbestimmten Schwellwert nicht unterschreitet. Figur 6D zeigt beispielhaft einen angestrebten Druckverlauf 606 zusammen mit einem Toleranzbereich, der durch eine obere Grenze 608 und eine untere Grenze 610 gebildet wird. Der angestrebte Druckverlauf verläuft nicht parallel zum Toleranzbereich. Vielmehr ist bei hohen Füllständen der Toleranzbereich durch die obere Grenze 608 limitiert, welche einem vorgegebenen zulässigen Maximaldruck entsprechend kann oder sich daraus ableiten kann, während bei niedrigen Füllständen der Toleranzbereich durch die untere Grenze 610 limitiert ist, welche einem vorgegebenen zulässigen Mindestdruck entsprechend kann oder sich daraus ableiten kann.

Anhand Figur 7 wird ein weiterer Vorteil einer optionalen Ausführungsform eines offenbarungsgemäßen Verfahrens zur Regelung der Wärmezufuhr anhand eines Temperatur-Dichte-Diagramms beschrieben. Dabei ist auf der horizontalen Achse die Temperatur in Kelvin und auf der vertikalen Achse die Dichte des Wasserstoffs im Kryodrucktank 16 in kg/m³ dargestellt. Die Linien 700 zeigen dabei Isobaren an, entlang welchen der Druck konstant ist. Der Verlauf 702 der Dichte gegenüber der Temperatur entspricht dabei jenem Verlauf, welcher mit einem herkömmlichen Verfahren zur Regelung der Wärmezufuhr erzielbar ist, d.h. mit einem Verfahren, bei dem anfangs bei hohen Füllständen keine Wärmezufuhr geregelt wird. Dabei ist zu erkennen, dass die Dichte bei niedrigen Temperaturen bereits rapide abfällt und sich der thermodynamische Zustand des Wasserstoffs dem thermodynamischen Bereich der Sättigung 704, in welchem der Wasserstoff zumindest teilweise in den flüssigen Aggregatszustand übergeht, sehr nah annähert. Dies hat den Nachteil, dass bereits kleine Schwankungen der Temperatur zu einem Fehler bei der Errechnung der Dichte und damit der Restkapazität des Wasserstoffs im Tank führen können. Der Verlauf 706f stellt hingegen einen Verlauf dar, welcher mit einer offenbarungsgemäßen Regelung der Wärmezufuhr zu erzielen ist. Diese unterscheidet sich von dem herkömmlichen Verlauf unter anderem darin, dass auch bei hohen Dichten die Temperatur erhöht wird und auf diese Weise ein sicherer Abstand (indiziert durch den Pfeil 708) des thermodynamischen Zustands des Wasserstoffs von der Zweiphasengrenze 704 für den gesamten Dichtebereich eingehalten werden kann. Dadurch droht bei Messungenauigkeiten der Temperatur kein großer Fehler bei der Bestimmung der Dichte und damit der Restkapazität des Wasserstoffs im Kryodrucktank (CcH2 CRYOGAS Tank) 16. Dadurch kann die Zuverlässigkeit des Betriebs des Kryodrucktanks 16 erhöht werden.

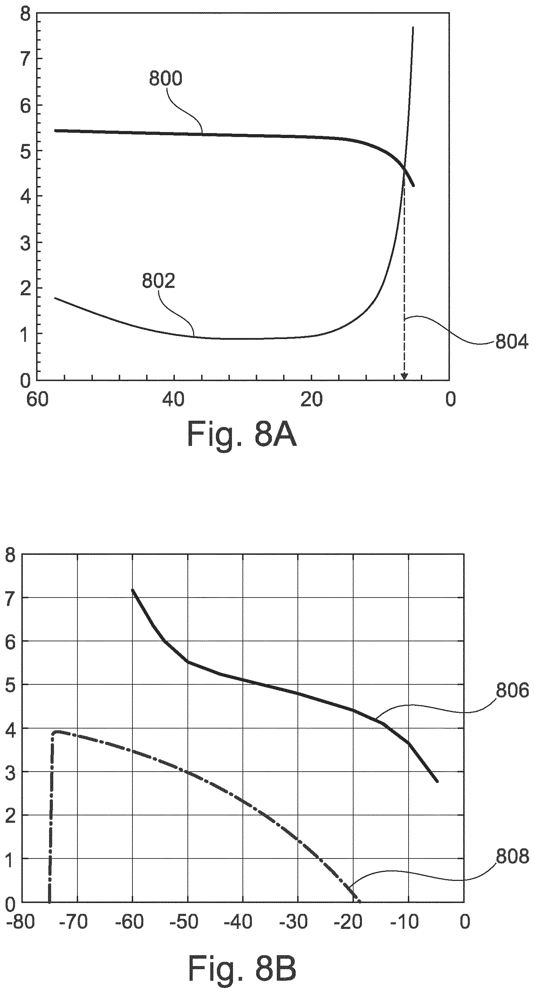

Die Figuren 8A und 8B zeigen einen Vergleich des Wärmeflusses gegenüber der Dichte des im Kryodrucktank 16 gespeicherten Wasserstoffs mit invertiertem Vorzeichen (der Fortschritt auf der horizontalen Ache nach rechts entspricht somit einer fortschreitenden Entleerung des Kryodrucktanks) für eine herkömmliche Regelung der Wärmezufuhr (Figur 8A), bei der der Druck zunächst auf den Mindestdruck abfällt und die Regelung den Druck sodann auf dem Mindestdruck hält, mit einer Regelung gemäß einer optionalen Ausführungsform, bei welcher ein linearer Druckverlauf vom Initialdruck zum Mindestdruck über den gesamten Entleerungsvorgang vorgegeben wird (Figur 8B). Dabei zeigt jeweils die horizontale Achse die Dichte des im Kryodrucktank gespeicherten Wasserstoffs in g/L und die vertikale Achse den Wärmefluss in kW.

Wie in Figur 8A zu erkennen ist, liegt im herkömmlichen Fall für einen großen Bereich der Füllstände des Kryodrucktanks der verfügbare Wärmefluss 800 deutlich über dem benötigten Wärmefluss 802, der benötigt wird, um einen Druck von 15 bar des gespeicherten Wasserstoffs beizubehalten. Allerdings steigt bei niedrigen Dichten unterhalb von etwa 10 g/L der erforderliche Wärmefluss rapide an, während der verfügbare Wärmefluss, der mittels des Wärmetauschers in den Wasserstoff eingebracht werden kann, abfällt. An dem Schnittpunkt 804 der beiden Kurven 800 und 802 übersteigt der benötigte Wärmefluss 802 sogar den verfügbaren Wärmefluss, so dass eine Aufrechterhaltung des Drucks von 15 bar nicht sichergestellt werden kann. Dies kann die Folge haben, dass der Druck des Wasserstoffs unter einen vorbestimmten Mindestdruck abfällt und mit dem verbleibenden Wasserstoff im Kryodrucktank der Verbraucher nicht mehr ausreichend versorgt werden kann.

Wie in Figur 8B zu sehen ist, tritt dieses Problem im Falle einer linearen Regelung gemäß einer optionalen Ausführungsform der Offenbarung nicht auf, bei welcher ein linearer Druckverlauf (zwischen Initialdruck und Mindestdruck) vorgegeben wird. Bei einer derartigen Regelung erfolgt eine Wärmezufuhr auch schon vor dem Punkt, an welchem der Druck den Mindestdruck erreicht. Dies bietet den Vorteil, dass der verfügbare Wärmefluss 806 stets größer als der benötige Wärmefluss 808 ist und diese qualitativ einen ähnlichen Verlauf aufweisen. Demnach kommt es in diesem Fall nicht zu dem kritischen Fall, dass der benötige Wärmefluss 808 den verfügbaren Wärmefluss 806 übersteigen kann. Somit besteht bei Verwendung einer derartigen Regelung gemäß einer optionalen Ausführungsform der Offenbarung keine Gefahr, dass der Druck unter den Mindestdruck abfällt und der Verbraucher nicht mehr mit dem vorrätigen Wasserstoff versorgt werden kann.

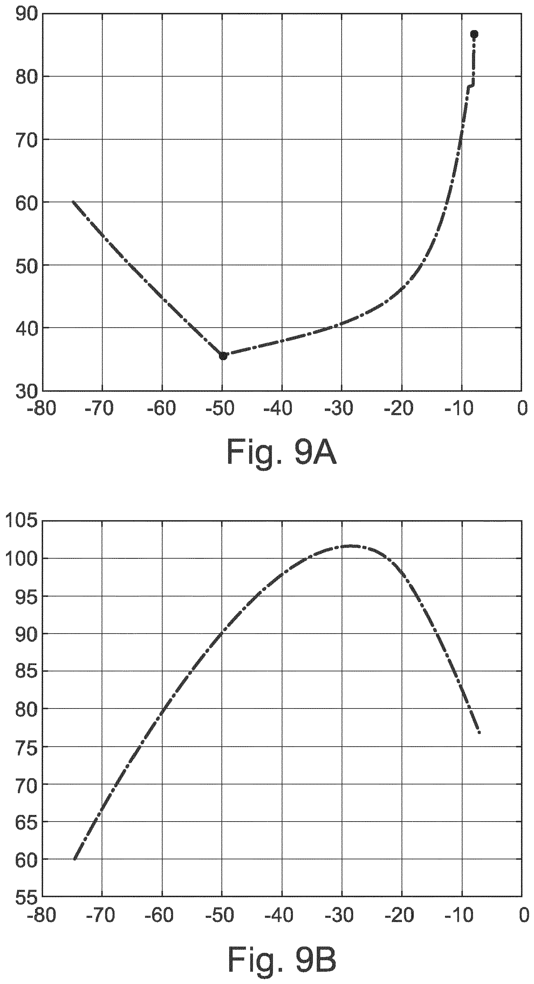

Außerdem kann dadurch ein Vorliegen des im Kryodrucktank 16 gespeicherten Wasserstoffs in einem tiefkalten Temperaturbereich von 35 K bis 60 K vermieden werden. Die Figuren 9A und 9B zeigen dabei für den in den Figuren 8A und 8B gezeigten Vergleich den entsprechenden Temperaturverlauf des Wasserstoffs im Kryodrucktank 16, wobei auf der horizontalen Achse die Dichte des im Kryodrucktanks gespeicherten Wasserstoffs mit invertiertem Vorzeichen in g/L und auf der vertikalen Achse die Temperatur in Kelvin aufgetragen ist. Im herkömmlichen Fall (wie mit Bezug auf Figur 8A beschrieben), der in Figur 9A gezeigt ist, geht die initiale Druckabnahme mit einer Temperaturabnahme einher, bei der die Temperatur des Wasserstoffs zunächst von etwa 60 K auf etwa 35 K abfällt. Erst bei Beginn der Wärmezufuhr mit dem Ziel, den Druck auf dem Mindestdruck zu halten, steigt die Temperatur wieder an.

Gemäß dem in Figur 9B gezeigten Fall mit einer Regelung der Wärmezufuhr für einen linearen Druckverlauf erfolgt hingegen kein initialer Temperaturabfall, sondern die Temperatur steigt gleich zu Beginn an. Somit dringt die Temperatur nicht in den tiefkalten Bereich zwischen 35 K und 60 K.

Bezugszeichenliste

10 Kraftfahrzeug

| | |
|---|---|
| 12 | Wasserstoffspeichersystem |
| 14 | Verbraucher |
| 16 | Kryodrucktank |
| 18 | Wärmezufuhrelement |
| 20 | Steuereinheit |
| 22 | Isolationsschicht |
| 24 | Außenhülle |
| 26 | Entnahmeleitung |
| 28 | Kryo-Ventileinheit |
| 30 | Wärmetauscher |
| 32 | Wärmeträgerkreislauf |
| 34 | Versorgungsleitung |
| 36 | zweite Ventileinheit |
| 38 | Regelventil |
| 40 | Druckanpassungseinheit |
| 42 | Zweigleitung |
| 44 | Wärmetauscher |
| 46 | Rückführleitung |
| 48 | Wärmetauscher |
| 300 | Verfahren zum Betrieb eines Kryodrucktanks (CcH2 CRYOGAS Tank) |
| 302 - 308 | Verfahrensschritte |
| 400 | herkömmlicher Druckverlauf |
| 402 | erste Phase der Entnahme von Wasserstoff |
| 404 | zweite Phase |
| 406 | herkömmlicher Druckverlauf |
| 408 | erste Phase |
| 410 | zweite Phase |
| 412 | dritte Phase |
| 414 | Druckverlauf gemäß optionaler Ausführungsform |
| 416 | gesamter Dichtebereich |
| 600 | Polynomfunktion |
| 602 | Exponentialfunktion |
| 604 | stufenförmiger Verlauf |
| 606 | angestrebter Druckverlauf |
| 608 | obere Grenze des Toleranzbereichs |
| 610 | untere Grenze des Toleranzbereichs |
| 700 | Isobaren |
| 702 | herkömmlicher Verlauf der Dichte |
| 704 | Zweiphasengrenze |
| 706 | Verlauf der Dichte gemäß optionaler Ausführungsform |
| 708 | Pfeil (indiziert den sicheren Abstand vom Sättigungsbereich) |
| 800 | verfügbarer Wärmefluss |
| 802 | benötigter Wärmefluss |
| 804 | Schnittpunkt |
| 806 | verfügbarer Wärmefluss |
| 808 | benötigter Wärmefluss |

**Patentansprüche**

1. Verfahren (300) zum Betrieb eines Kryodrucktanks (16), in welchem kryogener Wasserstoff bei einem überkritischen Initialdruck und einer Initialdichte gespeichert ist, zur Versorgung eines Verbrauchers (14) mit aus dem Kryodrucktank (16) entnommenem Wasserstoff, das Verfahren (300) **gekennzeichnet durch**:

   - Planen (306) eines angestrebten Druckverlaufs über einen Vorgang zur vollständigen Entnahme des bei dem Initialdruck und der Initialdichte im Kryodrucktank (16) gespeicherten Wasserstoffs hin zu einer vorbestimmten Mindestdichte bei einem vorbestimmten Mindestdruck des Wasserstoffs in entleertem Zustand des Kryodrucktanks (16) derart, dass sich eine Druckabnahme des Wasserstoffs im Kryodrucktank (16) hin zum Mindestdruck über den gesamten Vorgang zur vollständigen Entnahme erstreckt;
   - Regeln (308) einer Wärmezufuhr in den Kryodrucktank (16) während zumindest 70% des Vorgangs zur vollständigen Entnahme derart, dass der Druckverlauf des Wasserstoffs im Kryodrucktank (16) um nicht mehr als 10% von dem angestrebten Druckverlauf abweicht.

2. Verfahren (300) gemäß Anspruch 1, wobei der Vorgang zur vollständigen Entnahme einen oder mehrere Teilentnahmevorgänge umfasst.

3. Verfahren (300) gemäß Anspruch 2, wobei das Regeln der Wärmezufuhr in den Kryodrucktank (16) während des einen oder der mehreren Teilentnahmevorgänge erfolgt.

4. Verfahren (300) gemäß einem der vorhergehenden Ansprüche, ferner umfassend:

   - Messen (302) einer Temperatur und eines Drucks des im Kryodrucktank (16) befindlichen Wasserstoffs; und
   - Ermitteln (304) des Initialdrucks und der Initialdichte auf Basis der gemessenen Temperatur und des gemessenen Drucks.

5. Verfahren (300) gemäß einem der vorhergehenden Ansprüche, wobei das Planen (306) des angestrebten Druckverlaufs derart erfolgt, dass die Druckabnahme des Wasserstoffs im Kryodrucktank (16) hin zum Mindestdruck über den gesamten Vorgang zur vollständigen Entnahme monoton ist.

6. Verfahren (300) gemäß einem der vorhergehenden Ansprüche, wobei das Planen (306) des angestrebten Druckverlaufs derart erfolgt, dass die Druckabnahme des Wasserstoffs im Kryodrucktank hin zum Mindestdruck über den gesamten Vorgang zur vollständigen Entnahme linear ist.

7. Verfahren (300) gemäß Anspruch 6, wobei das Planen (306) des angestrebten Druckverlaufs ein Vorgeben einer angestrebten Änderung des Drucks in Abhängigkeit von der Dichte und/oder Temperatur des im Kryodrucktank (16) befindlichen Wasserstoffs umfasst, und
wobei die angestrebte Änderung des Drucks in Abhängigkeit von der Dichte und/oder Temperatur als konstanter Druckgradient vorgegeben wird.

8. Verfahren (300) gemäß einem der vorhergehenden Ansprüche, wobei das Planen (306) des angestrebten Druckverlaufs derart erfolgt, dass die Druckabnahme des Wasserstoffs im Kryodrucktank (16) hin zum Mindestdruck über den gesamten Vorgang zur vollständigen Entnahme einer vorbestimmten Polynomfunktion (600) oder einer vorbestimmten Exponentialfunktion (602) folgt.

9. Verfahren (300) gemäß einem der vorhergehenden Ansprüche, wobei das Planen (306) des angestrebten Druckverlaufs derart erfolgt, dass eine Anzahl von Phasen der Wärmezufuhr in den Kryodrucktank (16) minimal ist.

10. Verfahren (300) gemäß einem der vorhergehenden Ansprüche, wobei das Planen (306) des angestrebten Druckverlaufs derart erfolgt, dass die Druckabnahme des Wasserstoffs im Kryodrucktank (16) hin zum Mindestdruck über den gesamten Vorgang zur vollständigen Entnahme einen stufenförmigen Verlauf aufweist.

11. Verfahren (300) gemäß einem der vorhergehenden Ansprüche, wobei das Regeln (308) der Wärmezufuhr in den Kryodrucktank (16) ferner derart erfolgt, dass der Druckverlauf des Wasserstoffs im Kryodrucktank (16) einen vorbestimmten Maximaldruck des Kryodrucktanks (16) nicht überschreitet und/oder den vorbestimmten Mindestdruck nicht unterschreitet, und
wobei das Planen (306) des angestrebten Druckverlaufs ein Vorgeben eines Toleranzbereichs um den angestrebten Druckverlauf umfasst, wobei der Toleranzbereich den angestrebten Druckverlauf einschließt und im Bereich des Initialdrucks durch den vorbestimmten Maximaldruck des Kryodrucktanks (16) nach oben begrenzt ist und im Bereich des Mindestdrucks durch den vorbestimmten Mindestdruck nach unten begrenzt ist.

12. Verfahren (300) gemäß einem der vorhergehenden Ansprüche, wobei das Planen (306) des angestrebten Druckverlaufs derart erfolgt, dass ein Abstand des thermodynamischen Zustands des im Kryodrucktank gespeicherten Wasserstoffs von einer Zweiphasengrenze (704) des Wasserstoffs maximal ist und/oder einen vorbestimmten Schwellwert nicht unterschreitet.

13. Steuereinheit (20) zum Betrieb eines Kryodrucktanks (16) zur Speicherung von kryogenem Wasserstoff bei einem überkritischen Druck zur Versorgung eines Verbrauchers (14) mit aus dem Kryodrucktank (16) entnommenem Wasserstoff, **dadurch gekennzeichnet, dass**
die Steuereinheit (20) dazu eingerichtet ist, ein Verfahren gemäß einem der vorhergehenden Ansprüche durchzuführen.

14. Wasserstoffspeichersystem (12) zur Speicherung von kryogenem Wasserstoff zur Versorgung eines Verbrauchers (14) mit Wasserstoff, das Wasserstoffspeichersystem (12) umfassend:

> - einen Kryodrucktank (16), welcher dazu ausgelegt ist, Wasserstoff bei einem überkritischen Initialdruck und mit einer Initialdichte zu speichern;
> - ein Wärmezufuhrelement (18), welches dazu ausgelegt ist, dem im Kryodrucktank (16) gespeicherten Wasserstoff Wärme zuzuführen;
> - eine Steuereinheit (20), **dadurch gekennzeichnet, dass** die Steuereinheit dazu eingerichtet ist, die folgenden Schritte durchzuführen:

>> + Planen (306) eines angestrebten Druckverlaufs über einen Vorgang zur vollständigen Entnahme des bei dem Initialdruck und der Initialdichte im Kryodrucktank (16) gespeicherten Wasserstoffs hin zu einer vorbestimmten Mindestdichte bei einem vorbestimmten Mindestdruck des Wasserstoffs in entleertem Zustand des Kryodrucktanks (16) derart, dass sich eine Druckabnahme des Wasserstoffs im Kryodrucktank (16) hin zum Mindestdruck über den gesamten Vorgang zur vollständigen Entnahme erstreckt;
>> + Regeln (308) einer Wärmezufuhr in den Kryodrucktank (16) mittels des Wärmezufuhrelements (18) während zumindest 70% des Vorgangs zur vollständigen Entnahme derart, dass der Druckverlauf des Wasserstoffs im Kryodrucktank um nicht mehr als 10% von dem angestrebten Druckverlauf abweicht.

15. Kraftfahrzeug (10), aufweisend:

> - einen Wasserstoff-Verbrennungsmotor und/oder eine oder mehrere Brennstoffzellen; und

> - ein Wasserstoffspeichersystem (12) gemäß Anspruch 14, welches dazu ausgelegt ist, kryogenen Wasserstoff zu speichern und den Wasserstoff Verbrennungsmotor und/oder die Brennstoffzelle(n) mit dem Wasserstoff aus dem Wasserstoffspeichersystem (12) zu versorgen.

**Claims**

1. Method (300) for operating a cryo pressure tank (16), in which cryogenic hydrogen is stored at a supercritical initial pressure and an initial density, for supplying a consumer (14) with hydrogen removed from the cryo pressure tank (16), the method (300) **characterized by**:

> - planning (306) a desired pressure profile over an operation for the complete removal of the hydrogen, stored at the initial pressure and the initial density in the cryo pressure tank (16), to a predetermined minimum density at a predetermined minimum pressure of the hydrogen in an emptied state of the cryo pressure tank (16) in such a way that a pressure decrease of the hydrogen in the cryo pressure tank (16) to the minimum pressure extends over the entire operation for the complete removal;
> - regulating (308) a heat supply into the cryo pressure tank (16) during at least 70% of the operation for the complete removal in such a way that the pressure profile of the hydrogen in the cryo pressure tank (16) deviates by no more than 10% from the desired pressure profile.

2. Method (300) according to Claim 1, wherein the operation for the complete removal comprises one or more partial removal operations.

3. Method (300) according to Claim 2, wherein the regulating of the heat supply into the cryo pressure tank (16) is effected during the one or more partial removal operations.

4. Method (300) according to one of the preceding claims, further comprising:

> - measuring (302) a temperature and a pressure of the hydrogen in the cryo pressure tank (16); and
> - ascertaining (304) the initial pressure and the initial density on the basis of the measured temperature and the measured pressure.

5. Method (300) according to one of the preceding claims, wherein the planning (306) of the desired pressure profile is effected in such a way that the pressure decrease of the hydrogen in the cryo pressure tank (16) to the minimum pressure is monotonous over the entire operation for the complete removal.

6. Method (300) according to one of the preceding claims, wherein the planning (306) of the desired pressure profile is effected in such a way that the pressure decrease of the hydrogen in the cryo pressure tank to the minimum pressure is linear over the entire operation for the complete removal.

7. Method (300) according to Claim 6, wherein the planning (306) of the desired pressure profile comprises predefining a desired change in the pressure in dependence on the density and/or temperature of the hydrogen in the cryo pressure tank (16), and wherein the desired change in the pressure in dependence on the density and/or temperature is predefined as a constant pressure gradient.

8. Method (300) according to one of the preceding claims, wherein the planning (306) of the desired pressure profile is effected in such a way that the pressure decrease of the hydrogen in the cryo pressure tank (16) to the minimum pressure follows a predetermined polynomial function (600) or a predetermined exponential function (602) over the entire operation for the complete removal.

9. Method (300) according to one of the preceding claims, wherein the planning (306) of the desired pressure profile is effected in such a way that a number of phases of the heat supply into the cryo pressure tank (16) is minimal.

10. Method (300) according to one of the preceding claims, wherein the planning (306) of the desired pressure profile is effected in such a way that the pressure decrease of the hydrogen in the cryo pressure tank (16) to the minimum pressure has a step-like profile over the entire operation for the complete removal.

11. Method (300) according to one of the preceding claims, wherein the regulating (308) of the heat supply into the cryo pressure tank (16) is also effected in such a way that the pressure profile of the hydrogen in the cryo pressure tank (16) does not exceed a predetermined maximum pressure of the cryo pressure tank (16) and/or does not fall below the predetermined minimum pressure, and wherein the planning (306) of the desired pressure profile comprises predefining a tolerance range around the desired pressure profile, wherein the tolerance range includes the desired pressure profile and is upwardly limited in the region of the initial pressure by the predetermined maximum pressure of the cryo pressure tank (16) and is downwardly limited in the region of the minimum pressure by the predetermined minimum pressure.

12. Method (300) according to one of the preceding claims, wherein the planning (306) of the desired pressure profile is effected in such a way that a distance of the thermodynamic state of the hydrogen stored in the cryo pressure tank from a two-phase limit (704) of the hydrogen is maximal and/or does not fall below a predetermined threshold value.

13. Control unit (20) for operating a cryo pressure tank (16) for storing cryogenic hydrogen at a supercritical pressure for the supply of a consumer (14) with hydrogen removed from the cryo pressure tank (16), **characterized in that**
the control unit (20) is configured to carry out a method according to one of the preceding claims.

14. **Hydrogen** storage system (12) for storing cryogenic hydrogen for the supply of a consumer (14) with hydrogen, the hydrogen storage system (12) comprising:

   - a cryo pressure tank (16) which is designed to store hydrogen at a supercritical initial pressure and at an initial density;
   - a heat supply element (18) which is designed to supply heat to the hydrogen stored in the cryo pressure tank (16);
   - a control unit (20), **characterized in that** the control unit is configured to carry out the following steps:

   + planning (306) a desired pressure profile over an operation for the complete removal of the hydrogen, stored at the initial pressure and the initial density in the cryo pressure tank (16), to a predetermined minimum density at a predetermined minimum pressure of the hydrogen in an emptied state of the cryo pressure tank (16) in such a way that a pressure decrease of the hydrogen in the cryo pressure tank (16) to the minimum pressure extends over the entire operation for the complete removal;
   + regulating (308) a heat supply into the cryo pressure tank (16) by means of the heat supply element (18) during at least 70% of the operation for the complete removal in such a way that the pressure profile of the hydrogen in the cryo pressure tank deviates by no more than 10% from the desired pressure profile.

15. Motor vehicle (10) comprising:

- a hydrogen combustion engine and/or one or more fuel cells; and
- a hydrogen storage system (12) according to Claim 14 which is designed to store cryogenic hydrogen and to supply the hydrogen combustion engine and/or the fuel cell(s) with the hydrogen from the hydrogen storage system (12).

## Revendications

**1.** Procédé (300) de fonctionnement d'un réservoir sous pression cryogénique (16), dans lequel de l'hydrogène cryogénique est stocké à une pression initiale supercritique et une densité initiale, afin d'alimenter un consommateur (14) en hydrogène retiré du réservoir sous pression cryogénique (16), le procédé (300) étant **caractérisé par** :

- planifier (306) une variation de pression souhaitée sur un processus de retrait complet de l'hydrogène stocké dans le réservoir sous pression cryogénique (16) à la pression initiale et à la densité initiale jusqu'à une densité minimale prédéterminée à une pression minimale prédéterminée de l'hydrogène lorsque le réservoir sous pression cryogénique (16) est vidé de manière à ce qu'une diminution de la pression de l'hydrogène dans le réservoir sous pression cryogénique (16) jusqu'à la pression minimale s'étende sur tout le processus afin d'effectuer un retrait complet ;
- réguler (308) un apport de chaleur dans le réservoir sous pression cryogénique (16) pendant au moins 70 % du processus jusqu'au retrait complet de manière à ce que la variation de pression de l'hydrogène dans le réservoir sous pression cryogénique (16) ne s'écarte pas de plus de 10 % de la variation de pression souhaitée.

**2.** Procédé (300) selon la revendication 1, le processus de retrait complet comprenant un ou plusieurs processus de retrait partiels.

**3.** Procédé (300) selon la revendication 2, la régulation de l'apport de chaleur dans le réservoir sous pression cryogénique (16) étant effectuée pendant les un ou plusieurs processus de retrait partiel.

**4.** Procédé (300) selon l'une des revendications précédentes, comprenant en outre les étapes suivantes :

- mesurer (302) une température et une pression de l'hydrogène situé dans le réservoir sous pression cryogénique (16) ; et
- déterminer (304) la pression initiale et la densité initiale sur la base de la température mesurée et de la pression mesurée.

**5.** Procédé (300) selon l'une des revendications précédentes, la planification (306) de la variation de pression souhaitée étant effectuée de manière à ce que la diminution de la pression de l'hydrogène dans le réservoir sous pression cryogénique (16) jusqu'à la pression minimale soit monotone sur tout le processus de retrait complet.

**6.** Procédé (300) selon l'une des revendications précédentes, la planification (306) de la variation de pression souhaitée étant effectuée de manière à ce que la diminution de la pression de l'hydrogène dans le réservoir sous pression cryogénique jusqu'à la pression minimale soit linéaire sur tout le processus afin d'effectuer un retrait complet.

**7.** Procédé (300) selon la revendication 6, la planification (306) de la variation de pression souhaitée comprenant la spécification d'une modification souhaitée de la pression en fonction de la densité et/ou de la température de l'hydrogène situé dans le réservoir sous pression cryogénique (16), et la modification de pression souhaitée en fonction de la densité et/ou de la température étant spécifiée sous la forme d'un gradient de pression constant.

**8.** Procédé (300) selon l'une des revendications précédentes, la planification (306) de la variation de pression souhaitée étant effectuée de manière à ce que la diminution de la pression de l'hydrogène dans le réservoir sous pression cryogénique (16) jusqu'à la pression minimale sur tout le processus de retrait complet suit une fonction polynomiale prédéterminée (600) ou une fonction exponentielle prédéterminée (602).

**9.** Procédé (300) selon l'une des revendications précédentes, la planification (306) de la variation de pression souhaitée étant effectuée de manière à ce que le nombre de phases d'apport de chaleur dans le réservoir sous pression cryogénique (16) soit minimal.

**10.** Procédé (300) selon l'une des revendications précédentes, la planification (306) de la variation de pression souhaitée étant effectuée de manière à ce que la diminution de la pression de l'hydrogène dans le réservoir sous pression cryogénique (16) jusqu'à la pression minimale présente une variation en gradin sur tout le processus afin d'effectuer un retrait complet.

**11.** Procédé (300) selon l'une des revendications précédentes, la régulation (308) de l'apport de chaleur dans le réservoir sous pression cryogénique (16) étant effectuée également de manière à ce que la variation de pression de l'hydrogène dans le réservoir sous pression cryogénique (16) ne devienne pas supérieure à une pression maximale prédéterminée du réservoir sous pression cryogénique (16) et/ou ne devienne pas inférieure à la pression minimale prédéterminée, et

la planification (306) de la variation de pression souhaitée comprenant la spécification d'une zone de tolérance autour de la variation de pression souhaitée, la zone de tolérance comprenant la variation de pression souhaitée et étant limitée vers le haut dans la zone de pression initiale par la pression maximale prédéterminée du réservoir sous pression cryogénique (16) et étant limitée vers le bas dans la zone de pression minimale par la pression minimale prédéterminée.

12. Procédé (300) selon l'une des revendications précédentes, la planification (306) de la variation de pression souhaitée étant effectuée de manière à ce qu'une distance entre l'état thermodynamique de l'hydrogène stocké dans le réservoir sous pression cryogénique et une limite diphasique (704) de l'hydrogène soit maximale et/ou ne devienne pas inférieure à une valeur seuil prédéterminée.

13. Unité de commande (20) destinée à faire fonctionner un réservoir sous pression cryogénique (16) destiné à stocker de l'hydrogène cryogénique à une pression supercritique afin d'alimenter un consommateur (14) en hydrogène retiré du réservoir sous pression cryogénique (16), **caractérisée en ce que**

l'unité de commande (20) est conçue pour mettre en œuvre un procédé selon l'une des revendications précédentes.

14. Système de stockage d'hydrogène (12) destiné à stocker de l'hydrogène cryogénique afin d'alimenter un consommateur (14) en hydrogène, le système de stockage d'hydrogène (12) comprenant :

- un réservoir sous pression cryogénique (16) qui est conçu pour stocker de l'hydrogène à une pression initiale supercritique et avec une densité initiale ;
- un élément d'apport de chaleur (18), qui est conçu pour apporter de la chaleur à l'hydrogène stocké dans le réservoir sous pression cryogénique (16) ;
- une unité de commande (20), **caractérisé en ce que** l'unité de commande est conçue pour réaliser les étapes suivantes :

+ planifier (306) une variation de pression souhaitée sur un processus de retrait complet de l'hydrogène stocké dans le réservoir sous pression cryogénique (16) à la pression initiale et à la densité initiale jusqu'à une densité minimale prédéterminée à une pression minimale prédéterminée de l'hydrogène lorsque le réservoir sous pression cryogénique (16) est vidé de manière à ce qu'une diminution de la pression de l'hydrogène dans le réservoir sous pression cryogénique (16) jusqu'à la pression minimale s'étende sur tout le processus afin d'effectuer un retrait complet ;

+ réguler (308) un apport de chaleur dans le réservoir sous pression cryogénique (16) au moyen de l'élément d'apport de chaleur (18) pendant au moins 70 % du processus jusqu'au retrait complet de manière à ce que la variation de pression de l'hydrogène dans le réservoir sous pression cryogénique ne s'écarte pas de plus de 10 % de la variation de pression souhaitée.

15. Véhicule automobile (10), comportant :

- un moteur à combustion interne à hydrogène et/ou une ou plusieurs piles à combustible ; et
- un système de stockage d'hydrogène (12) selon la revendication 14, qui est conçu pour stocker de l'hydrogène cryogénique et pour alimenter le moteur à combustion interne en hydrogène et/ou la ou les piles à combustible avec l'hydrogène provenant du système de stockage d'hydrogène (12).

Fig. 1

Fig. 2

300

302

304

306

308

Fig. 3

Fig. 4A

Fig. 4B

Fig. 4C

Fig. 5A

Fig. 5B

Fig. 5C

$$\left(\frac{dP}{d\rho}\right)_{constant} \longrightarrow \boxed{C_1} \longrightarrow P_{setpoint}$$

$\rho$

$$\longrightarrow P_{setpoint}^{i+1} = P_{setpoint}^{i} + \left(\frac{dP}{d\rho}\right)_{constant} (\rho^{i} - \rho^{i-1})$$

## Fig. 5D

$\rho, m$

$\frac{dm}{dt}$

$(\rho^i, P^i)$

$(\rho^{i+1}, P^{i+1})$

$t$

$\dot{m}$

$\Delta t$

$t$

## Fig. 5E

$$\left(\frac{dP}{d\rho}\right)_{constant} \longrightarrow \boxed{C_1} \longrightarrow P_{setpoint}$$

$\dot{m}$   $\Delta t$

$$\longrightarrow P_{setpoint}^{i+1} = P_{setpoint}^{i} + \left(\frac{dP}{d\rho}\right)_{constant} \frac{\dot{m}\Delta t}{V_{tank}}$$

## Fig. 5F

P $(\rho_0, P_0)$

600

$(\rho_{min}, P_{min})$

$\rho_0 - \rho$

Fig. 6A

P $(\rho_0, P_0)$

602

$(\rho_{min}, P_{min})$

$\rho_0 - \rho$

Fig. 6B

P $(\rho_0, P_0)$

604

$(\rho_{min}, P_{min})$

$\rho_0 - \rho$

Fig. 6C

Fig. 6D

Fig. 7

Fig. 8A

Fig. 8B

Fig. 9A

Fig. 9B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009071208 A1
- WO 2013143773 A1
- WO 2013143774 A1
- WO 2022150474 A1

**In der Beschreibung aufgeführte Nicht-Patentliteratur**

- **C.M. RANGEL et al.** Fuel Starvation: Irreversible Degradation Mechanisms in PEM Fuel Cells. *WHEC 2010*, 04 June 2014